(19) Europäisches Patentamt
European Patent Office
Office européen des brevets

(11) **EP 4 703 026 A1**

(12) **EUROPEAN PATENT APPLICATION**

(43) Date of publication:
**04.03.2026 Bulletin 2026/10**

(21) Application number: **24196465.9**

(22) Date of filing: **26.08.2024**

(51) International Patent Classification (IPC):
***B01D 53/62*** *(2006.01)* ***B01D 53/04*** *(2006.01)*
***B01D 53/14*** *(2006.01)*

(52) Cooperative Patent Classification (CPC):
**B01D 53/02; B01D 53/0462; B01D 53/1475; B01D 53/62;** B01D 53/1493; B01D 2252/20405; B01D 2252/20426; B01D 2252/20484; B01D 2253/20; B01D 2257/504; B01D 2258/0283; B01D 2258/05

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Københavns Universitet**
**1165 København K (DK)**

(72) Inventors:
- **LEE, Jiwoong**
  **Copenhagen (DK)**
- **PETROVIC, Aleksa**
  **Vallensbæk Strand (DK)**
- **LIMA, Rodrigo**
  **Copenhagen (DK)**

(74) Representative: **Plougmann Vingtoft a/s**
**Strandvejen 70**
**2900 Hellerup (DK)**

(54) **METHOD FOR CARBON DIOXIDE CAPTURE**

(57) The present invention relates to a novel sorption medium for removing $CO_2$ from a gas mixture. In particular the present invention relates to a method for separating $CO_2$ from a gas mixture comprising $CO_2$, wherein said method comprises the steps of a) providing a gas mixture comprising $CO_2$; b) contacting the gas mixture with at least one sorption medium under conditions suitable for the sorption medium to sorb the $CO_2$ to obtain a $CO_2$-enriched sorption medium; c) desorbing $CO_2$ from the $CO_2$-enriched sorption medium under conditions suitable for the $CO_2$-enriched sorption medium to desorb $CO_2$ to regenerate the sorption medium and obtain $CO_2$, wherein said sorption medium comprises alkanolamine derivatives of formula (I) herein.

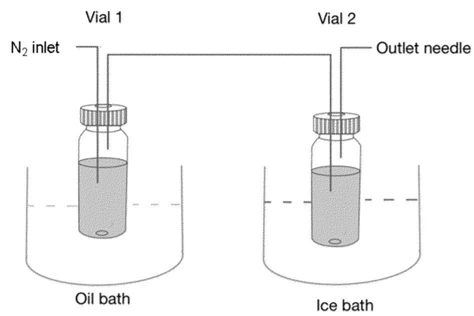


Fig. 1

EP 4 703 026 A1

## Description

### Technical field of the invention

The present invention relates to a novel organic sorption medium for removing $CO_2$ from a gas mixture. In particular the present invention relates to a method for separating $CO_2$ from a gas mixture comprising $CO_2$ using alkanolamine derivatives as sorption medium. The sorption of CO2 using alkanolamines may for example be applied in post-combustion carbon capture (PCC).

### Background of the invention

Carbon capture and sequestration (CCS) is essential for mitigating global carbon emissions during the transition to cleaner energy sources. The latest IPCC report underscores the urgency of limiting Earth's surface warming to 1.5-2 °C from pre-industrial levels to prevent irreversible damage. Post-combustion carbon capture (PCC) from point sources is a pivotal technology for achieving net-zero emissions. Aqueous amine scrubbing is an industrial standard PCC method due to its maturity and suitability for deployment at a plant-scale level. Amine absorbents have high chemoselectivity towards $CO_2$ and a rapid absorption profile. Moreover, they are cheap and easy to manufacture from platform chemicals but suffer from high energy requirements for solvent regeneration causing a substantial parasitic burden to the operating power plant. They corrode plant equipment and form byproducts that reduce the capture performance, creating environmental concerns due to the evaporation and decomposition of amines.

To address these challenges, water-lean systems for carbon capture have been explored. Substituting high-heat capacity water with organic diluents enhances the performance of absorbents while preserving their chemical characteristics. Various non-aqueous organic amine blends, amino silicates, superbases, amino acids, alkyl carbonates, and N-heterocyclic systems were developed to enhance physical absorption (equimolar absorption capacity) with regeneration temperatures as low as 80-100°C. Switchable organic amines responsive to $CO_2$ has also been generated, which can modulate physical properties - polarity, solubility, and hygroscopicity - of the solution under mild switchable conditions without significant heat energy input for regeneration. These switchable absorbents are straightforward to synthesize, albeit the requirement of multiple synthetic steps. These water-lean systems have problems of cost, scalability, structural complexity, and often toxicity which taint them as potential absorbents. Considering that PCC should be accompanied by large-scale operations and taking into account the global production volumes of amine-based absorbents, it is evident that the use of the most common absorbent, monoethanolamine (MEA) (alongside ammonia), is already maximized across all power plants. Introducing additional complexity into the chemical structures and thus the synthesis of amine absorbents may not be feasible. Although this view should not be taken as an absolute, it serves as a guide for designing novel sorbent systems.

Hence, an improved method for separating $CO_2$ from a gas mixture comprising $CO_2$, preferably post-combustion gas, would be advantageous, and in particular a high-performing $CO_2$ sorption medium in terms of $CO_2$ capture capacity, kinetics, reduced corrosion of plant equipment and regeneration temperatures would be advantageous.

US20160250591 A1 discloses methods for reducing $CO_2$ from flue gas using a chemisorption process with a sorbent solution that includes an alkanolamine, such as MEA. Only MEA is used as a sorbent in the examples of US20160250591 A1. EP4035760 A1 relates to a carbon dioxide absorbent composition, in which an N-alkylaminoalkanol; a polyhydroxyamine-based compound; and ethylenediamine and/or diethylenetriamine are mixed, a method for preparing the same, and a method and an apparatus for carbon dioxide absorption/separation using the same. Thus, EP4035760 A1 discloses using several different absorbent mediums including an N-alkylaminoalkanol to capture $CO_2$ but does not disclose using N-alkylaminoalkanol alone. EP4035760 A1 uses $C_1$-$C_4$-alkylaminoalkanol in the examples (table 1).

While using alkali carbonates like sodium carbonate as carbon dioxide absorbents instead of primary alkanolamines such as MEA is known (e.g. US8119091B2), this method suffers from a slow $CO_2$ absorption rate. To address this, WO2004089512 A1 added piperazine or its derivatives to potassium carbonate which significantly enhanced the $CO_2$ absorption rate. However, issues with precipitation when using carbonates still needed to be resolved.

### Summary of the invention

The inventors envisioned how to access ideal sorbent systems for amine-based $CO_2$ capture based on the following criteria: (1) a water lean system or water-free system with high processibility (e.g. low foaming), (2) low volatility of the absorbents to minimize evaporation loss and environmental concerns, (3) altering the absorbent to offset $\Delta H_{abs}$ and high-temperature requirement, and (4) high absorption, regeneration rate, and recycling performance in neat conditions. Based on previous work conducted by the inventors on $CO_2$-responsive molecules in aqueous systems, alkylated amino alcohols have emerged as potential candidates for achieving these criteria. These amphiphilic amines exhibit switchable properties triggered by $CO_2$, leading to self-aggregation in aqueous solutions. $CO_2$-Induced formation of micellar

structures can facilitate water release, impacting the spontaneity of the capture process by increasing the entropy. $CO_2$ has already been identified as an ideal trigger for reversible self-assembly in aqueous media with polymeric materials applied in for example forward osmosis desalination and membrane separation.

Thus, an object of the present invention relates to providing an improved $CO_2$ sorption medium that satisfies the criteria listed above. In particular, it is an object of the present invention to provide a method for separating $CO_2$ from a gas mixture comprising $CO_2$, and to provide a $CO_2$ sorption medium that can be used in said application, which solves the above-mentioned problems of the prior art with high regeneration temperatures, corrosion of plant equipment, high cost and complexity with introducing novel sorbents into existing plants.

Thus, one aspect of the invention relates to a method for separating $CO_2$ from a gas mixture comprising $CO_2$, said method comprising the steps of:

a) providing a gas mixture comprising $CO_2$;
b) contacting the gas mixture with at least one sorption medium under conditions suitable for the sorption medium to sorb the $CO_2$ to obtain a $CO_2$-enriched sorption medium;
c) desorbing $CO_2$ from the $CO_2$-enriched sorption medium under conditions suitable for the $CO_2$-enriched sorption medium to desorb $CO_2$ to regenerate the sorption medium and obtain $CO_2$;

wherein said sorption medium comprises a compound of formula (I):

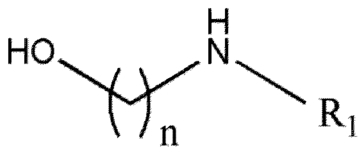 (I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

Another aspect of the present invention relates to the use of a compound of formula (I):

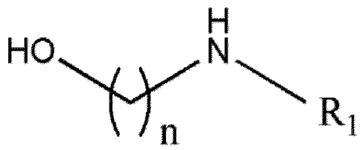 (I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne,

to separate $CO_2$ from a gas mixture comprising $CO_2$.

**Brief description of the figures**

**Figure 1** is a schematic illustration of a setup to qualitatively measure the desorption of $CO_2$ from the sorption medium of the present invention. Vial 1, containing the viscous solution of $CO_2$ saturated sorbent was placed in an oil bath. The vial was equipped with a long needle that was connected to an $N_2$ source and a cannula that was connected to Vial 2. The contents of vial 2 were 20 wt% MEA (80 wt% DI water) solution, that absorbs $CO_2$ well and could be analyzed by $^{13}$C-NMR spectroscopy. Vial 2 was equipped with an exhaust needle to establish a free $N_2$ flow during desorption and make sure all $CO_2$ was incorporated. Subsequently, the 20 wt% MEA solution was analyzed by $^{13}$C-NMR spectroscopy to measure the carbonyl peak, since it was indicative of the amount of $CO_2$ desorbed.

**Figure 2** shows preliminary experiments with enhanced $CO_2$ capture performance of C12-MEA in brine (#3) compared to DI water (#4). $CO_2$ capture performance using the benchmark $CO_2$ absorbent (MEA) has also been tested in brine (#2) and DI water (#1).

**Figure 3A** shows the weight percentage (wt%) of $CO_2$ absorbed using alkylated MEA with different alkyl chain lengths ranging from 0 to 16.

**Figure 3B** shows screening of the absorbent (C10-MEA) loading ranging from 5 wt% to 90 wt% C10-MEA as compared to brine.

**Figure 4A** shows the effect of increasing salt concentration on $CO_2$ capturing performance of 80 wt% C10-MEA solution after 1 hour (shaded) or in total (without shade). The horizontal lines represent the $CO_2$ absorbed by the benchmark 20 wt% MEA solution in DI water after 1 hour (dotted line) or in total (full line).

**Figure 4B** is a schematic illustration of the $CO_2$ capturing process in DI water (left) or in brine at a low or high salinity (right). The addition of salt to the $CO_2$ sorption system of the present invention induces self-aggregation of sorbent amphiphiles in a water-lean system.

**Figure 4C** shows the salt effect on C10-MEA aggregation in 1 mM DMSO solution measured in Dynamic Light Scattering (DLS).

**Figure 5A** shows the Hofmeister anion series effect on $CO_2$ capture rate and performance (experiments performed in triplicates). $LiClO_4$ was added as a common micelle-breaking salt. Commonly used anions and cations have been ordered based on their kosmotropic (structure-stabilizing) and chaotropic (structure-destabilizing) effects.

**Figure 5B** shows absorption/desorption cycle of the 80 wt% C10-MEA solution and 20 wt% 0.6 M brine.

**Figure 5C** shows $CO_2$ absorption curves of model seawater (250 g/L NaCl and 36 g/L NaCl) and real seawater solutions.

**Figure 5D** shows pictures of 100 mM C10-MEA solution after the addition of i) NaCl, ii) $CO_2$, and iii) NaCl + $CO_2$.

**Figure 6A** shows chemical structures of C10-MEA upon exposure to $CO_2$ and physical difference of C10-MEA crystals before and after $CO_2$ exposure.

**Figure 6B** shows electron diffraction structure of $CO_2$ captured by C10-MEA.

**Figure 7** shows gravimetric uptake of $CO_2$ with C10-MEA at 30 °C and desorption of $CO_2$ under $N_2$ atmosphere, and repeated cycle of sorption and desorption.

**Figure 8A** shows repeated gravimetric uptake and desorption of $CO_2$ using 5% $CO_2$ (in $N_2$) stream.

**Figure 8B** shows repeated gravimetric uptake and desorption of $CO_2$ using 0.58% $CO_2$ (in $N_2$) stream.

**Figure 9A** shows gravimetric uptake of $CO_2$ with Cn-MEA (n=10, 12, 14, and 16).

**Figure 9B** shows gravimetric uptake of $CO_2$ with Cn-MEA (n=10, 12, 14, and 16) together with desorption profile under $N_2$ atmosphere.

**Figure 10A** shows gravimetric uptake of $CO_2$ with C10-MEA at different temperatures (30-75 °C)

**Figure 10B** shows thermal gravimetric analysis of C10-MEA under $CO_2$ atmospheres (1% and 100% $CO_2$).

**Figure 11** shows thermal gravimetric analysis of C10-MEA under $CO_2$ atmospheres for both sorption and desorption.

The present invention will now be described in more detail in the following.

## Detailed description of the invention

Definitions

Prior to discussing the present invention in further details, the following terms and conventions will first be defined:

*Carbon dioxide*

Carbon dioxide is a chemical compound with the chemical formula $CO_2$. It is a significant greenhouse gas in Earth's atmosphere, contributing to the greenhouse effect by trapping heat. Carbon dioxide thereby plays a crucial role in regulating Earth's temperature. Carbon dioxide is produced by the respiration of animals, the combustion of organic matter, and various industrial processes, such as combustion of fossil fuels, cement production, steel manufacturing, and oil refining. In the present context, '$CO_2$' and 'carbon dioxide' are used interchangeably.

Gas mixture comprising $CO_2$

In the present context, the term 'Gas mixture comprising $CO_2$' refers to a $CO_2$ gas often with one or more different gases that are mixed together without any chemical bonding between them, however, it may also refer to pure $CO_2$ gas. Each gas in the mixture retains its own chemical properties. A gas mixture comprising COz includes but is not limited to

biogas, post-combustion gas mixture, and flue gas.

Biogas is produced through the anaerobic digestion of organic matter by microorganisms. It is generated from the decomposition of organic materials like agricultural waste, manure, municipal waste, plant material, sewage, green waste, or food waste. Biogas primarily consists of methane ($CH_4$) and carbon dioxide ($CO_2$), with small amounts of other gases such as hydrogen sulphide ($H_2S$) and ammonia ($NH_3$).

Post-combustion gas mixture refers to the gases that are emitted after the combustion process in engines, power plants, or industrial facilities. It is produced from the burning of fossil fuels such as coal, oil, natural gas, and biomass in various combustion systems. Post-combustion gas mixture typically includes carbon dioxide ($CO_2$), water vapor ($H_2O$), nitrogen oxides ($NO_x$), sulphur oxides ($SO_x$), carbon monoxide (CO), unburned hydrocarbons, and other trace gases. Flue gas is the exhaust gas that is emitted from the combustion process in industrial facilities, power plants, and other combustion systems. It is produced from the burning of fossil fuels such as coal, oil, natural gas, and biomass in boilers, furnaces, and other combustion equipment. Flue gas typically contains carbon dioxide ($CO_2$), water vapor ($H_2O$), nitrogen oxides ($NO_x$), sulphur oxides ($SO_x$), carbon monoxide (CO), and other trace pollutants.

In an embodiment, the Gas mixture comprising $CO_2$ is an industrial gas mixture.

*Sorption medium*

'Sorption medium' refers to the environment where the sorption process occurs. This term includes both the sorbent medium as well as the conditions and space in which sorption takes place. While 'sorbent medium' only refers to a material used to absorb or adsorb liquids or gases, 'sorption medium' refers to both the sorbent medium and the surrounding conditions, such as water content and ionic strength. In the present context, the term 'sorption medium' refers to a material used to absorb or adsorb $CO_2$ from a gas mixture comprising $CO_2$. Absorption involves the uptake of substances into the volume of the sorbent, while adsorption involves the accumulation of substances on the surface of the sorbent. As demonstrated in the examples, the sorption medium of the present invention can absorb $CO_2$ in aqueous conditions (Examples 1-5) or adsorb $CO_2$ in a solid-state (Example 6).

The sorption medium of the present invention comprises a compound of formula (I):

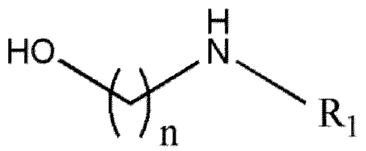

(I)

wherein

n is an integer selected from the range of 2-6, and

$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

The sorption medium might also be a mixture of compounds of formula (I).

*Sorb*

The term 'Sorb' refers to the process of taking up or holding a substance, either by absorption or adsorption. In the present context, the substance is $CO_2$. Absorption involves the uptake of substances into the volume of the sorbent, while adsorption involves the accumulation of substances on the surface of the sorbent. The sorption medium can sorb and desorb $CO_2$ either in the same place or at different zones. The term 'Sorption zone' refers to a specific area or region within a system where the process of sorption (absorption or adsorption) occurs. If sorption is conducted in the same place as desorption, sorption/desorption is regulated by temperature and/or gas flow.

*Desorb*

The term 'Desorb' refers to the process of releasing or removing a substance that has been absorbed or adsorbed onto a surface (adsorption) or within a material (absorption). In the present context, the substance is $CO_2$. The term 'Desorption zone' refers to a specific area or region within a system where the process of desorption occurs. If desorption is conducted in the same place as sorption, sorption/desorption is regulated by temperature and/or gas flow. Preferably the desorption is performed under water vapor (steam), $CO_2$ gas flow, nitrogen gas flow, or argon gas flow, more preferably under water vapor (steam) or $CO_2$ gas flow.

*$CO_2$-enriched sorption medium*

The term '$CO_2$-enriched sorption medium' refers to a sorption medium that has sorbed $CO_2$ from the gas mixture comprising $CO_2$. In the present context, the sorption medium sorbs $CO_2$ using the secondary amine group. A $CO_2$-enriched sorption medium might be fully saturated with $CO_2$ if every sorbent in a sorption medium mixture has sorbed $CO_2$, but the term also covers sorption mediums that are not fully saturated, i.e., sorption mediums wherein some sorbent has sorbed $CO_2$ whereas others have not.

*Optionally substituted $C_6$-$C_{25}$ alkyl*

The term 'Optionally substituted $C_6$-$C_{25}$ alkyl' refers to an alkyl group that contains between 6 and 25 carbon atoms and may have one or more substituents attached to it. The optionally substituted $C_6$-$C_{25}$ alkyl might be or comprise elements that are linear, branched or cyclic. The substituent includes but is not limited to a halide, $C_1$-$C_8$ alkyl, $C_2$-$C_8$ alkene, and $C_2$-$C_8$ alkyne.

*Optionally substituted $C_6$-$C_{25}$ alkene*

The term 'Optionally substituted $C_6$-$C_{25}$ alkene' refers to an alkene group that contains between 6 and 25 carbon atoms and may have one or more substituents attached to it. Alkenes are hydrocarbons that contain at least one carbon-carbon double bond (C=C). For example, a $C_6$ alkene is a hexene, and a $C_{25}$ alkene is a pentacosenene. The optionally substituted $C_6$-$C_{25}$ alkene might be or comprise elements that are linear, branched or cyclic. The substituent includes but is not limited to a halide, $C_1$-$C_8$ alkyl, $C_2$-$C_8$ alkene, and $C_2$-$C_8$ alkyne.

*Optionally substituted $C_6$-$C_{25}$ alkyne*

The term 'Optionally substituted $C_6$-$C_{25}$ alkyne' refers to an alkyne group that contains between 6 and 25 carbon atoms and may have one or more substituents attached to it. Alkynes are hydrocarbons that contain at least one carbon-carbon triple bond (C=C). For example, a $C_6$ alkyne is a hexyne, and a $C_{25}$ alkyne is a pentacosyne. The optionally substituted $C_6$-$C_{25}$ alkyne might be or comprise elements that are linear, branched or cyclic. The substituent includes but is not limited to a halide, $C_1$-$C_8$ alkyl, $C_2$-$C_8$ alkene, and $C_2$-$C_8$ alkyne.

*Monoethanolamine (MEA)*

Monoethanolamine (MEA) is an organic chemical compound classified as an amino alcohol. Its chemical formula is $C_2H_7NO$. MEA has the following formula:

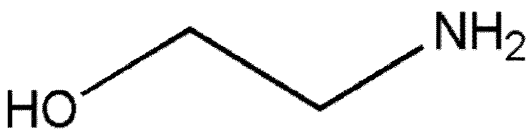

MEA is used to remove carbon dioxide and hydrogen sulphide from natural gas and refinery gases. It the present examples, MEA is used as a benchmark.

The present invention may among other compounds involve monoethanolamine with a radical at the $R_1$ position. Said monoethanolamine derivatives are represented using the following formula:

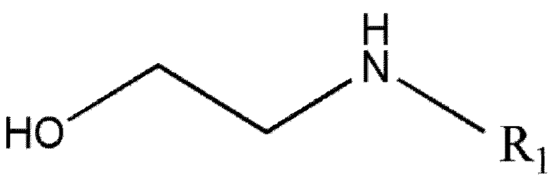

wherein $R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

*Salt*

The term 'salt' refers to a chemical compound consisting of an assembly of positively charged ions (cations) and negatively charged ions (anions), which results in a compound with no net electric charge (electrically neutral). The constituent ions are held together by electrostatic forces termed ionic bonds. In an embodiment, the salt is an inorganic salt. An inorganic salt is a type of salt that does not contain carbon-hydrogen (C-H) bonds, distinguishing it from organic salts. Salts include but are not limited to sodium chloride, potassium chloride, lithium chloride, calcium chloride, magnesium chloride, aluminium chloride, sodium bromide, potassium bromide, lithium bromide, calcium bromide, magnesium bromide, aluminium bromide, sodium iodide, potassium iodide, lithium iodide, calcium iodide, magnesium iodide, aluminium iodide, sodium sulphate, potassium sulphate, lithium sulphate, magnesium sulphate, aluminium sulphate, and lithium perchlorate.

*Ionic strength*

Ionic strength is a measure of the concentration of ions in a solution. It quantifies the total ionic charge present, which affects various properties of the solution, such as the dissociation constant and solubility of salts.
The ionic strength (I) of a solution is calculated using the formula:

$$I = \frac{1}{2}\sum_{i=1}^{n} c_i {z_i}^2$$

Where $c_i$ is the molar concentration of ion (i) in mol/L and $z_i$ is the charge number of ion (i). The sum is taken over all ions in the solution.
In an embodiment, the ionic strength of the sorption medium is in the range of 0.1 mol/L to 6.2 mol/L, such as 0.5 mol/L to 6 mol/L, such as 1 mol/L to 5.8 mol/L, such as 1.5 mol/L to 5.5 mol/L, such as 2 mol/L to 5.3 mol/L, such as preferably 2.5 mol/L to 5 mol/L, such as 3 mol/L to 4.8 mol/L, such as 3.5 mol/L to 4.6 mol/L, more preferably 4.0 to 4.5 mol/L, such as 4.2 mol/L to 4.4 mol/L, most preferably 4.3 mol/L.

*Alkali halide*

An alkali halide is a type of inorganic compound formed by the combination of an alkali metal and a halogen. These compounds have the general formula MX, where M represents an alkali metal (such as lithium, sodium, potassium, rubidium, or cesium) and X represents a halogen (such as fluorine, chlorine, bromine, or iodine). Alkali halide includes but is not limited to sodium chloride (NaCl), potassium bromide (KBr), and lithium fluoride (LiF).

***A Method for separation $CO_2$ from a gas mixture***

The sorption medium of the present invention can be used as a water-lean system (absorbent in brine) or in a neat or solid-state (adsorbent) to sorb $CO_2$. The energy demand of these systems are significantly reduced compared with the benchmark MEA, and it would therefore be more energy-efficient and more cost-effective to use the sorption medium of the present invention compared with the benchmark MEA.
Thus, an aspect of the present invention relates to a method for separating $CO_2$ from a gas mixture comprising $CO_2$, said method comprising the steps of:

a) providing a gas mixture comprising $CO_2$;
b) contacting the gas mixture with at least one sorption medium under conditions suitable for the sorption medium to sorb the $CO_2$ to obtain a $CO_2$-enriched sorption medium;
c) desorbing $CO_2$ from the $CO_2$-enriched sorption medium under conditions suitable for the $CO_2$-enriched sorption medium to desorb $CO_2$ to regenerate the sorption medium and obtain $CO_2$;

wherein said sorption medium comprises a compound of formula (I):

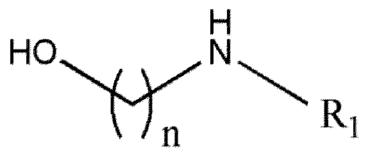
(I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

In an alternative aspect, the present invention relates to a method for separating $CO_2$ from a gas mixture comprising $CO_2$, said method comprising the steps of:

a) providing a gas mixture comprising $CO_2$;
b) contacting the gas mixture with at least one sorption medium under conditions suitable for the sorption medium to sorb the $CO_2$ to obtain a $CO_2$-enriched sorption medium;
c) desorbing $CO_2$ from the $CO_2$-enriched sorption medium under conditions suitable for the $CO_2$-enriched sorption medium to desorb $CO_2$ to regenerate the sorption medium and obtain $CO_2$;

wherein said sorption medium comprises a compound of formula (I):

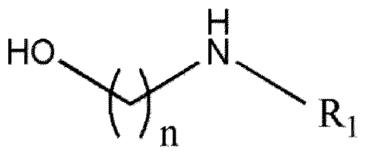 (I)

wherein

n is an integer selected from the range of 2-6, and
$R_1$ is selected from the group consisting of optionally substituted $C_8$-$C_{25}$ alkyl, optionally substituted $C_8$-$C_{25}$ alkene, and optionally substituted $C_8$-$C_{25}$ alkyne.

It may be beneficial to mix different compounds of formula (I) in a sorption medium, since the compounds might be optimized for different conditions, e.g., for different temperatures, different water contents or salinity. Thus, in yet another alternative aspect, the present invention relates to a method for separating $CO_2$ from a gas mixture comprising $CO_2$, said method comprising the steps of:

a) providing a gas mixture comprising $CO_2$;
b) contacting the gas mixture with at least one sorption medium under conditions suitable for the sorption medium to sorb the $CO_2$ to obtain a $CO_2$-enriched sorption medium;
c) desorbing $CO_2$ from the $CO_2$-enriched sorption medium under conditions suitable for the $CO_2$-enriched sorption medium to desorb $CO_2$ to regenerate the sorption medium and obtain $CO_2$;

wherein said sorption medium comprises at least two different compounds of formula (I):

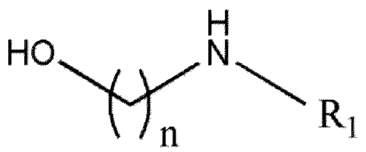 (I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

***Use of a compound of formula (I)***

Another aspect of the present invention relates to the use of a compound of formula (I):

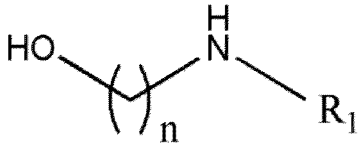

(I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne,

to separate $CO_2$ from a gas mixture comprising $CO_2$.

An alternative aspect of the present invention relates to the use of a compound of formula (I):

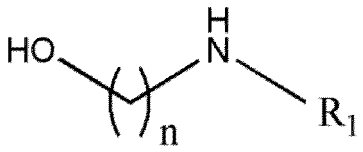

(I)

wherein

n is an integer selected from the range of 2-6, and
$R_1$ is selected from the group consisting of optionally substituted $C_8$-$C_{25}$ alkyl, optionally substituted $C_8$-$C_{25}$ alkene, and optionally substituted $C_8$-$C_{25}$ alkyne,

to separate $CO_2$ from a gas mixture comprising $CO_2$.

***The sorption medium***

The examples demonstrated that different hydrophobic derivatives of MEA could be used to sorb $CO_2$. Thus, in an embodiment, n is an integer selected from the range of 2-4, preferably 2 or 3, more preferably 2. Thus, in a preferred embodiment, the compound of formula (I) is:

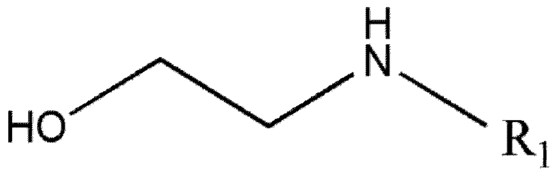

wherein $R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

The present inventors have demonstrated that the length of the $R_1$ group could vary greatly (Fig. 3A) while retaining the desired effects, although C10-MEA is preferred for both the absorbent system (Example 3) and the adsorbent system (Example 6). Thus, in an embodiment, $R_1$ is selected from the group consisting of an optionally substituted $C_8$-$C_{20}$-alkyl, -alkene, and -alkyne, such as an optionally substituted $C_9$-$C_{18}$-alkyl, -alkene, and -alkyne, such as an optionally substituted $C_{10}$-$C_{16}$-alkyl, -alkene, and -alkyne, such as an optionally substituted $C_{10}$-$C_{14}$-alkyl, -alkene, and -alkyne, such as an optionally substituted $C_{10}$-$C_{12}$-alkyl, - alkene, and -alkyne, preferably an optionally substituted $C_{10}$-alkyl, -alkene, and - alkyne.

In another embodiment, $R_1$ is selected from the group consisting of an optionally substituted $C_8$-$C_{20}$ alkyl, such as an optionally substituted $C_9$-$C_{18}$ alkyl, such as an optionally substituted $C_{10}$-$C_{16}$ alkyl, preferably an optionally substituted $C_{10}$-$C_{14}$ alkyl, more preferably an optionally substituted $C_{10}$-$C_{12}$ alkyl, most preferably an optionally substituted $C_{10}$ alkyl.

In yet another embodiment, $R_1$ is linear or branched, such as preferably linear.

In an embodiment, the substituent on the optionally substituted $C_6$-$C_{25}$ alkyl, optionally substituted $C_6$-$C_{25}$ alkene, and optionally substituted $C_6$-$C_{25}$ alkyne is selected from the group consisting of a halide, $C_1$-$C_8$ alkyl, $C_2$-$C_8$ alkene, and $C_2$-$C_8$ alkyne. In another embodiment, the substituent is selected from the group consisting of a halide, $C_1$-$C_8$

alkyl, $C_2$-$C_8$ alkene, and $C_2$-$C_8$ alkyne, preferably a halide or a $C_1$-$C_8$ alkyl. In yet another embodiment, the halide is selected from the group consisting of chloride, fluoride, bromine, and iodide.

The optionally substituted $C_6$-$C_{25}$ alkene, optionally substituted $C_8$-$C_{25}$ alkene or the $C_2$-$C_8$ alkene substituent each have at least one double bond. Thus, in an embodiment, the alkene comprises one or more double bonds, preferably one double bond.

The optionally substituted $C_6$-$C_{25}$ alkyne, optionally substituted $C_8$-$C_{25}$ alkyne or the $C_2$-$C_8$ alkyne substituent each have at least one triple bond. Hence, in an embodiment, the alkyne comprises one or more triple bonds, preferably one triple bond.

As demonstrated in examples 2-5, the compounds of formula (I) of the present invention can be a $CO_2$ absorbent in aqueous conditions. Thus, in an embodiment, the sorption medium is a liquid at 20 °C. However, as demonstrated in example 6, the sorption medium of the present invention can also be a $CO_2$ adsorbent by capturing $CO_2$ in a solid state, where the compounds of formula (I) are typically in neat form. Hence, in an embodiment, the sorption medium is a solid at 20 °C. Examples 2-5 investigate the properties of the sorption medium in aqueous conditions. Thus, in an embodiment, the sorption medium further comprises water. In another embodiment, the sorption medium comprises 10 % to 90 % (w/w) water, such as 10 % to 80 % (w/w) water, such as 10 % to 75 % (w/w) water, such as 10 % to 70 % (w/w) water, such as 15 % to 60 % (w/w) water, such as 15 % to 50 % (w/w) water, such as 15 % to 40 % (w/w) water, preferably 15 % to 30 % (w/w) water, more preferably 15 % to 25 % (w/w) water, most preferably 20 % (w/w) water relative to the compound of formula (I).

In yet another embodiment, the sorption medium comprises less than 90 % (w/w) water, such as less than 85 % (w/w) water, such as less than 80 % (w/w) water, such as less than 75 % (w/w) water, such as less than 70 % (w/w) water, such as less than 65 % (w/w) water, such as less than 60 % (w/w) water, such as less than 50 % (w/w) water, preferably less than 40 % (w/w) water, more preferably less than 30 % (w/w) water, most preferably less than 20 % (w/w) water relative to the compound of formula (I).

When the inventors added salt to the DI water, the sorbent medium formed micelles (fig. 4B). Example 5 demonstrates that increasing the ionic strength of the sorption medium by adding salt increases the entropy of the system and contributes to the self-aggregation of amphiphiles which in turn expels water from the micelles. The $CO_2$ sorption system of the present invention therefore has a reduced water content in high-ion strength solutions thereby generating a water-lean $CO_2$ sorption system. Thus, in an embodiment, the sorption medium further comprises at least one salt. In a preferred embodiment, the salt is an inorganic salt.

As demonstrated in Example 5, the sorption medium of the present invention could efficiently capture $CO_2$ in the presence of different types of salt. $LiClO_4$ is a common micelle-breaking salt, and the inventors therefore anticipated that said salt might not work with the sorbent medium of the present invention. However, as shown in figure 5A, $LiClO_4$ could also be used in the sorption medium of the present invention. Thus, it appears that the sorption medium of the present invention can function is varies different salt compositions. Hence, in an embodiment, the cation in the salt is selected from the list consisting of sodium, potassium, lithium, calcium, magnesium, aluminium, rubidium, caesium, zinc, barium, ammonium, and tetramethylammonium, preferably sodium. In another embodiment, the anion in the salt is selected from the list consisting of chloride, bromide, iodide, sulphate, fluoride, nitrate, perchlorate, dihydrogen phosphate, thiosulphate, carbonate, and thiocyanate, preferably chloride, iodide or sulphate, more preferably chloride or sulphate, most preferably chloride.

In yet another embodiment, the salt is selected from the group consisting of sodium chloride, potassium chloride, lithium chloride, calcium chloride, magnesium chloride, aluminium chloride, sodium bromide, potassium bromide, lithium bromide, calcium bromide, magnesium bromide, aluminium bromide, sodium iodide, potassium iodide, lithium iodide, calcium iodide, magnesium iodide, aluminium iodide, sodium sulphate, potassium sulphate, lithium sulphate, magnesium sulphate, aluminium sulphate, and lithium perchlorate, or a mixture thereof, preferably sodium chloride, sodium sulphate or sodium iodide. As shown in figure 5A, sodium sulphate is surprisingly better than sodium chloride in capturing $CO_2$. Thus, in an embodiment, the salt is selected from sodium chloride or sodium sulphate. However, sodium chloride is cheaper than sodium sulphate and said salt might therefore be the most preferred salt. Thus, in an embodiment, the salt is sodium chloride. In an embodiment, the salt is an alkali halide, such as sodium chloride.

The salinity was varied for the sorption medium in example 4. This example demonstrates that for C10-MEA, the NaCl salt concentration of 250 g/L was optimal in terms of total $CO_2$ capture capacity (9.65 wt%) reaching the 20 wt% MEA benchmark (9.71 mmol $CO_2$ per g of absorbent), but the sorption medium was also rather efficient at the other salinities tested. Thus, in an embodiment, the ionic strength of the sorption medium is in the range of 0.1 mol/L to 6.2 mol/L, such as 0.5 mol/L to 6 mol/L, such as 1 mol/L to 5.8 mol/L, such as 1.5 mol/L to 5.5 mol/L, such as 2 mol/L to 5.3 mol/L, such as preferably 2.5 mol/L to 5 mol/L, such as 3 mol/L to 4.8 mol/L, such as 3.5 mol/L to 4.6 mol/L, more preferably 4.0 to 4.5 mol/L, such as 4.2 mol/L to 4.4 mol/L, most preferably 4.3 mol/L.

In an embodiment, the sorption medium further comprises water and at least one salt. In a preferred embodiment, the sorption medium further comprises water and sodium chloride.

In an embodiment, the sorption medium comprises sodium chloride in the range of 1 g/L to 360 g/L, such as 5 g/L to 350 g/L, such as 30 g/L to 340 g/L, such as 100 g/L to 330 g/L, such as 150 g/L to 320 g/L, such as 175 g/L to 310 g/L, such

as preferably 200 g/L to 300 g/L, such as 210 g/L to 290 g/L, such as 220 g/L to 280 g/L, more preferably 230 g/L to 270 g/L, such as 240 g/L to 260 g/L, most preferably 250 g/L.

It may be beneficial to mix different compounds of formula (I) in a sorption medium, since the compounds might be optimized for different conditions, e.g., for different temperatures, different water contents or salinity. Thus, in an embodiment, the sorption medium comprises two or more different compounds of formula (I). In another embodiment, the sorption medium comprises a mixture of compounds of formula (I).

### *The gas mixture*

The sorption medium of the present invention could be used for post-combustion carbon capture (PCC). In an embodiment, the gas mixture is selected from the group consisting of biogas, post-combustion gas mixture, and flue gas.

In another embodiment, the $CO_2$ concentration in the gas mixture is at least 1,000 ppm, such as at least 1,200 ppm, at least 1,500 ppm, at least 1,700 ppm, such as at least 2,000 ppm, such as at least 2,500 ppm, such as at least 3,000 ppm, such as at least 3,500 ppm, such as at least 4,000 ppm, preferably in the range of 1,000 ppm to 1,000,000 ppm.

### *Conditions suitable for the sorption medium to sorb*

In an embodiment, the temperature in step b) is below 60 °C, such as below 50 °C, such as below 40 °C, such as in the range of 0 °C to 60 °C, such as in the range of 5 °C to 50 °C, such as in the range of 10 °C to 40 °C, such as in the range of 15 °C to 30 °C, such as preferably in the range of 15 °C to 25 °C. Examples 2-5 demonstrated that the sorption medium of the present invention can be used to absorb $CO_2$. Thus, in an embodiment, the sorption medium absorbs $CO_2$ to obtain a $CO_2$-enriched sorption medium in step b).

Example 6 demonstrates that the sorption medium of the present invention can be used to adsorb $CO_2$. Thus, in another embodiment, the sorption medium adsorbs $CO_2$ to obtain a $CO_2$-enriched sorption medium in step b).

### *The $CO_2$-enriched sorption medium*

When the sorption medium sorbs $CO_2$, the sorption medium becomes more viscous which could result in an increased density of the $CO_2$-enriched sorption medium. Thus, in an embodiment, the $CO_2$-enriched sorption medium has a higher density than the sorption medium.

### *Conditions suitable for the $CO_2$-enriched sorption medium to desorb*

In an embodiment, the temperature in step c) is above 20 °C, such as above 25 °C, such as above 30 °C, preferably above 40 °C, such as in the range of 20 °C to 100 °C, such as in the range of 25 °C to 95 °C, such as in the range of 30 °C to 90 °C, such as preferably in the range of 40 °C to 80 °C, such as more preferably in the range of 45 °C to 70 °C, such as in the range of 50 °C to 65 °C. The optimal temperature for $CO_2$ desorption is often lower for the solid-state sorption medium compared with the sorption medium in e.g. saltwater. Thus, in an embodiment, the sorption medium is a liquid at 20 °C, wherein the temperature in step c) is above 40 °C, such as in the range of 40 °C to 100 °C, such as in the range of 40 °C to 90 °C, such as preferably in the range of 45 °C to 80 °C, such as more preferably in the range of 50 °C to 70 °C.

In another embodiment, the sorption medium is solid at 20 °C, wherein the temperature in step c) is above 20 °C, such as above 25 °C, such as in the range of 20 °C to 100 °C, such as preferably in the range of 25 °C to 90 °C, such as more preferably in the range of 30 °C to 80 °C, such as in the range of 40 °C to 75 °C, such as most preferably in the range of 50 °C to 70 °C.

The desorption can also be controlled by changing the gas flow. Thus, in an embodiment, the desorption in step c) is performed under water vapor, $CO_2$ gas flow, nitrogen gas flow, or argon gas flow, preferably water vapor or $CO_2$ gas flow.

### *Further defining cyclic sorption-desorption process*

As shown in figure 7 and figure 8A, the sorption medium of the present invention can be reused for several cycles. Thus, in an embodiment, the method is a cyclic sorption-desorption process. The sorption medium retains a high efficiency even after more than 20 cycles (Fig. 8A). Hence, in an embodiment, the loss of sorption medium per cycle in the cyclic sorption-desorption process is less than 10%, such as less than 5%, such as preferably less than 1%, such as less than 0.1%.

In another embodiment, the sorption and desorption of $CO_2$ is controlled by the temperature of the sorption medium. In another embodiment, the difference between the temperature suitable for sorption and the temperature suitable for desorption is less than 50 °C, such as less than 40 °C, such as less than 35 °C, such as less than 30 °C, such as less than 25 °C. In yet another embodiment, the sorption and desorption of $CO_2$ is controlled by gas flow.

### *Further defining the sorption zone and desorption zone*

The sorption and desorption of $CO_2$ using the sorption medium of the present invention might be conducted in the same zone or in different zones. Thus, in an embodiment, the sorption is performed in a sorption zone and the desorption is performed in a desorption zone. In another embodiment, the sorption of $CO_2$ is controlled by the temperature in the sorption zone and the desorption of $CO_2$ is controlled by the temperature in the desorption zone.

In a preferred embodiment, the sorption and desorption are performed in the same zone, i.e. the sorption zone and the desorption zone are the same zone.

In an embodiment, the method is applied in carbon capture from post-combustion gas, biogas or flue gas, preferably flue gas or biogas.

It should be noted that embodiments and features described in the context of one of the aspects of the present invention also apply to the other aspects of the invention. All patent and non-patent references cited in the present application, are hereby incorporated by reference in their entirety.

The invention will now be described in further details in the following non-limiting examples.

## Examples

### Example 1 - Materials and methods

*Materials and Chemicals*

Solvents, reagents, and chemicals were purchased from commercial vendors and used without further purification. $CO_2$ (99.70%) was purchased from Air Liquide and used as received. 2-(Methylamino)ethanol, 2-(Ethylamino) ethanol and 2-(Butylamino)ethanol were purchased from TCI Europe.

*Characterization*

$^1H$ NMR and $^{13}C$ NMR spectra were recorded at 500 MHz and 125 MHz, respectively, using $CDCl_3$ as a solvent on a Bruker Ultrashield Plus 500 spectrometer. All chemical shifts ($\delta$) are reported in ppm using the solvent residual peak as a reference and all coupling constants (J) are expressed in Hertz (Hz). The following abbreviations are used for multiplicity for NMR resonances: s = singlet, d = doublet, t = triplet, q = quartet, and m = multiplet. Fourier transform infrared (FT-IR) spectra were collected on a Bruker Alpha-P FT-IR spectrometer equipped with an attenuated total reflectance (ATR) module. The thermogravimetric analysis (TGA) was performed using a Discovery TGA from TA instruments (New Castle, DE, USA) under a constant flow of 35 mL/min nitrogen. The samples were heated in a platinum TGA pan from room temperature to 300 °C at a heating rate of 10 °C/min. From the TGA results, the thermal decompositions and the first derivative of TGA (dTGA) temperatures of the samples were determined using Trios v5.1.1.46572 software (TA Instruments, New Castle, USA). Differential scanning calorimetry (DSC) analysis was performed using a Discovery DSC (TA Instruments, New Castle, USA). The samples of 4-5 mg were weighed in Tzero aluminum pans with a perforated lid. Analyses of the samples were conducted under a nitrogen flow of 50 mL/min using a linear heating rate of 10 °C/min. The samples were heated from 30 to 300 °C. The melting point temperatures (Tm) and melting enthalpy (Delta Hm) were determined using Trios v5.1.1.46572 software (TA Instruments, New Castle, USA). The particle size and polydispersity index (PDI) of samples were detected by dynamic light scattering (DLS, Zetasizer Pro, Malvern Instruments, Malvern, UK). The samples were dissolved in DMSO and placed in quartz cuvettes. The heat of absorption values were obtained from calorimetric measurements performed on a passive heat flow instrument (TAM 2277 from TA Instruments, New Castel, DE, USA).

*Synthesis and characterization of the absorbents*

The absorbents were synthesized following the modified general procedure from the literature (US7157554 B2). The large-scale synthesis of 2-(decylamino)ethanol is given below as an example. Other absorbents were synthesized in an analogous procedure, affording NMR spectra in accordance with literature values.

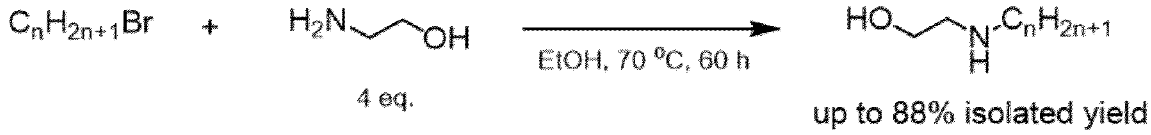


**Scheme 1.** A general synthesis scheme for Cn-MEA absorbents

Monoethanolamine (0.992 mol, 60 mL, 4 eq.) was added to a 1.5 L of absolute EtOH in a 3 L three-necked round-bottomed flask. The power output of the heating jacket was adjusted so that the solution was maintained at 70 °C. When the desired temperature was reached, a 60 mL syringe filled with 1-bromodecane (0.243 mol, 51.5 mL, 1 eq.) was fixed to a syringe pump with a long needle going through the septum of the three-necked flask. After the setup was complete, slow addition was initiated at the rate of 1 mL/h over 60 h. After adding alkyl bromide, the mixture was left to react for 24 h.

The mixture was transferred to a round-bottomed flask and all EtOH was evaporated. The residue was dissolved in 200 mL of ethyl acetate and the organic phase was washed with 2 x 200 mL of $H_2O$. The organic phase was subsequently washed with 200 mL of sat. $NaHCO_3$, and 200 mL of brine, after which it was dried with $NaSO_4$. Ethyl acetate was removed under reduced pressure and the residue was a slightly pale-yellow liquid. C10-MEA was distilled at 150 °C at 2 mbar. The distillate is a colorless liquid, which solidifies at room temperature.

*2- (Pen tylamino)ethanol*

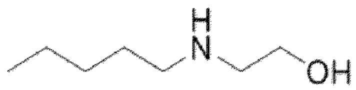

Colorless liquid, **Yield:** 4.0 g, 81% **$^1$H-NMR** (500 MHz, $CDCl_3$): $\delta$ = 3.64 (t, 2H, J = 5.2 Hz), 2.77 (t, 2H, J = 5.2 Hz), 2.61 (t, 2H, J = 7.2 Hz), 2.24 (s, 2H), 1.49 (m, 2H), 1.36 - 1.24 (m, 4H), 0.89 (t, 3H, J = 7.1 Hz) **$^{13}$C-NMR** (125 MHz, $CDCl_3$): $\delta$ = 60.9, 51.2, 49.6, 29.9, 29.6, 22.7, 14.2.

*2-(Hexylamino)ethanol*

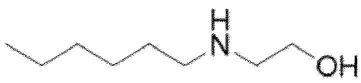

Colorless liquid, **Yield:** 4.3 g. **$^1$H-NMR** (500 MHz, $CDCl_3$): $\delta$ = 3.64 (t, 2H, J = 5.2 Hz), 2.78 (t, 2H, J = 5.2 Hz), 2.62 (t, 2H, J = 7.2 Hz), 2.24 (s, 2H), 1.49 (m, 2H), 1.36 - 1.23 (m, 6H), 0.88 (t, 3H, J = 7.1 Hz) **$^{13}$C-NMR** (125 MHz, $CDCl_3$): $\delta$ = 60.9, 51.2, 49.6, 31.9, 30.2, 27.1, 22.8, 14.2.

*2-(Octylamino)ethanol*

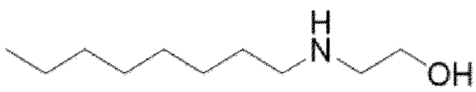

Colorless liquid, **Yield:** 4.2 g, 84% **$^1$H-NMR** (500 MHz, $CDCl_3$): $\delta$ = 3.64 (t, 2H, J = 5.2 Hz), 2.77 (t, 2H, J = 5.2 Hz), 2.61 (t, 2H, J = 7.2 Hz), 2.23 (s, 2H), 1.48 (m, 2H), 1.34 - 1.20 (m, 10H), 0.88 (t, 3H, J = 7.1 Hz) **$^{13}$C-NMR** (125 MHz, $CDCl_3$): $\delta$ = 60.9, 51.2, 49.6, 32.0, 30.2, 29.7, 29.4, 27.4, 22.8, 14.2.

*2-(Nonylamino)ethanol*

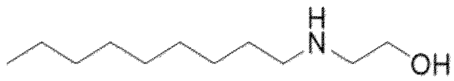

Colorless liquid, **Yield:** 4.0 g, 80% **$^1$H-NMR** (500 MHz, $CDCl_3$): δ = 3.64 (t, 2H, J = 5.2 Hz), 2.78 (t, 2H, J = 5.2 Hz), 2.62 (t, 2H, J = 7.2 Hz), 2.19 (s, 2H), 1.49z (m, 2H), 1.35 - 1.19 (m, 12H), 0.88 (t, 3H, J = 7.1 Hz) **$^{13}$C-NMR** (125 MHz, $CDCl_3$): δ = 60.9, 51.1, 49.6, 32.0, 30.2, 29.75 - 29.65 (m), 27.4, 22.8, 14.2.

*2-(Decylamino)ethanol*

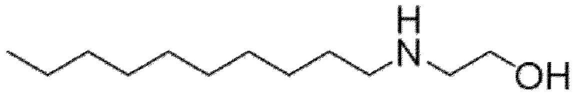

White solid, **Yield:** 43.3 g, 88% **$^1$H-NMR** (500 MHz, $CDCl_3$): δ = 3.65 (t, 2H, J = 5 Hz), 2.78 (t, 2H, J = 5 Hz), 2.62 (t, 2H, J = 7.2 Hz), 2.38 (s, 2H), 1.50 (m, 2H), 1.29 - 1.26 (m, 12H), 0.88 (t, 3H, J = 7.2 Hz) **$^{13}$C-NMR** (125 MHz, $CDCl_3$): δ = 60.8, 51.1, 49.6, 32.0, 30.1, 29.78 - 29.64 (m), 29.5, 27.4, 22.8, 14.3.

*2-(Dodecylamino)ethanol*

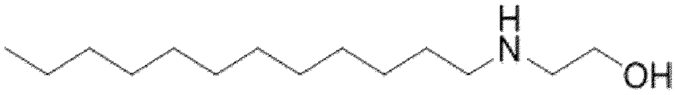

White solid, **Yield:** 2.9 g, 29% **$^1$H-NMR** (500 MHz, $CDCl_3$): δ = 3.63 (t, 2H, J = 5.2 Hz), δ 2.78 (t, 2H, J = 5.2 Hz), 2.61 (t, 2H, J = 7.2 Hz), 1.79 (s, 2H), 1.48 (m, 2H), 1.35 - 1.20 (m, 18H), 0.88 (t, 3H, J = 7.1 Hz)δ **$^{13}$C-NMR** (125 MHz, $CDCl_3$): δ = 61.0, 54.0, 51.1, 49.6, 32.1, 30.4, 29.86 - 29.68 (m), 29.5, 27.5, 22.8, 14.3.

*2-(Hexadecylamino)ethanol*

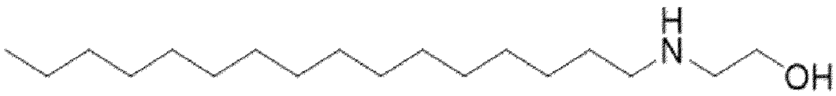

White solid, **Yield:** 3.4 g, 72% **$^1$H-NMR** (500 MHz, $CDCl_3$): δ = 3.69 (t, 2H, J = 5.2 Hz), 2.83 (t, 2H, J = 5.2 Hz), 2.67 (t, 2H, J = 7.2 Hz), 2.5 (s, 2H), 1.54 (m, 2H), 1.36 - 1.20 (m, 30H), 0.88 (t, 3H, J = 7.1 Hz) **$^{13}$C-NMR** (125 MHz, $CDCl_3$): δ = 60.5, 51.1, 49.5, 32.1, 30.00 - 29.7 (m), 29.6, 29.5, 27.4, 22.8, 14.3.

*$CO_2$ absorption procedure*

The absorption experiments were executed as follows: The absorbent solution was prepared by weighing out the appropriate amount of the absorbent amine in an 8 mL vial and evacuating it from $CO_2$ under reduced pressure at 40 °C. The appropriate amount of water/brine was added afterward over the weighing scale. A $CO_2$ gas canister connected to a Sensirion flow meter was attached to the vial via a long needle, while the small needle was used as an outlet valve. The flow rate was set to 2 mL/min to avoid evaporation of water during the absorption process. The mass change was recorded in arbitrary intervals so that a saturation curve could be obtained.

*Desorption procedure*

Desorption was performed by heating the vial in a heating block to 50 °C under nitrogen flow until all $CO_2$ and water were gone.

Note: NMR spectroscopy could not be used directly because the jelly solution was not soluble in $D_2O$. While the

solution was soluble in certain organic NMR solvents, the $CO_2$ species present in the solution were not visible in those solvents.

*Qualitative $CO_2$ detection with $^{13}$C-NMR spectroscopy*

The $^{13}$C-NMR sequence used for qualitative analysis was the regular 32-scan method, and no parameters were altered. DMPU (1,3-dimethyltetrahydropyrimidin-2(1H)-one) was used as an internal standard in an attempt to quantify the $CO_2$ with $^{13}$C-NMR spectroscopy.

A saturated 20 wt% MEA (80 wt% $D_2O$) solution with $CO_2$ was analyzed and all $CO_2$ species (carbamate and bicarbonate) could be identified: Carbamate; 164.38 ppm, Bicarbonate; 160.63 ppm.

To qualitatively show the desorption of $CO_2$ the setup was designed as follows **(Fig. 1):** Vial 1, containing the viscous solution of $CO_2$ saturated 80wt% C10-MEA (20 wt% brine) was placed in an oil bath. The vial was equipped with a long needle that was connected to an $N_2$ source and a cannula that was connected to Vial 2. The contents of vial 2 are 20 wt% MEA (80 wt% DI water) solution, that absorbs $CO_2$ well and could be analyzed by $^{13}$C-NMR spectroscopy. Vial 2 was equipped with an exhaust needle to establish a free $N_2$ flow during desorption and make sure all $CO_2$ was incorporated. The results of the optimized experiment were that 80 wt% C10-MEA (20 wt% brine) could be fully desorbed at 50 °C in 30 min.

$^{13}$C NMR analysis of vial 2 required 10 v/v% (0.1 mL) of $D_2O$ and 20 mol% of internal standard (DMPU). The spectrum shows the prominent carbonyl peak at 164 ppm attributed to the MEA-carbamate (Data not shown).

*Calorimetric measurements and determination of $\Delta H_{abs}$*

Sample 1: 80wt% C10-MEA (100 mg), 20wt% of 35 g/L $NaCl_{(aq)}$ (25 mg).

General Conditions: The experiment was performed at 25 °C without stirring. The absorbent mixture was purged with $N_2$ before the measurement. The experiment consisted of five injections of 20 μL (0.818 μmol, 0.16 equiv.) of $CO_2$. For this experiment, the energy released was 53.81 mJ averaging over peaks (corrected values used).

- Heat of absorption:

$$\Delta H_{abs} = \frac{53.81\ \text{mJ}}{0.0008175\ \text{mmol}} = 65.8\ ^{\text{kJ}}/_{\text{mol}} = 15.\ 7\ ^{\text{kcal}}/_{\text{mol}}$$

Sample 2: 80wt% C10-MEA (100 mg), 20wt% of 250 g/L NaCl(aq) (25 mg). Heat of absorption obtained: 78 kJ/mol.

To test the validity of the results, a control experiment was performed where we dosed 50 mJ to an empty holder. The integrals of these peaks (corrected values) were close to 50 mJ with minimal error (1%).

**Example 2 - Alkylated MEA as a $CO_2$ absorbent**

*Aim of study*

The aim of this study was to compare the performances of alkylated MEA (exemplified using C12-MEA) and unmodified MEA directly in brine and deionized water (DI).

*Results*

Alkylated MEA (exemplified by C12-MEA) captures $CO_2$ using the secondary amine; thus, alkylated MEA and $CO_2$ generates a reversible polarity switch:

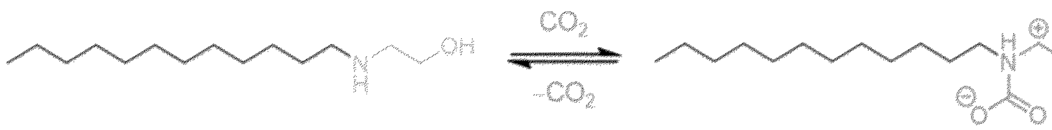


To test the absorbent system, the inventors used 35 g/L NaCl (0.6 M) solution to mimic the average seawater salt concentration, which is abundant and more accessible than pure water. A comparative study on $CO_2$ capture **(Fig. 2)** revealed that C12-MEA showed higher capture capacity in saline water than in deionized water (0.70 compared to 0.47

$mol_{CO2}$:$mol_{absorbent}$ loading, respectively). Unmodified MEA showed negligible difference in terms of total capacity in pure and saline water.

*Conclusion*

This example demonstrates that alkylated MEA can be used as a $CO_2$ absorbent and the effect is significantly improved by the addition of salt (NaCl). Unmodified MEA showed negligible difference in terms of total $CO_2$ loading capacity in pure and saline water.

**Example 3** - **Varying alkyl chain length in alkylated MEA**

*Aim of study*

Based on the preliminary result shown in example 2, the inventors hypothesized that the increased performance of alkylated MEA in a brine solution was directly related to the hydrophobicity of the absorbent. To test this hypothesis, the inventors tested alkylated MEA with varying chain lengths.

*Results*

The inventors varied the chain length of alkylated MEA molecules via a one-step substitution reaction from the MEA molecule and a corresponding alkyl bromide (see example 1 for a detailed description) and tested the absorbents under identical conditions. The reaction conditions were 20 wt% absorbent in 80 wt% DI water or brine 0.6 M, with pure $CO_2$ used at a low flow rate (2 mL/min, room temperature to minimize evaporative water loss). Results show that up to C9-MEA the performance between experiments in DI water (grey bars) and brine (black bars) were close to identical and C10-MEA was identified as the first molecule that exhibited higher performance in brine **(Fig. 3A).** Interestingly, the longer the chain length the greater the difference between experiments in brine and DI water (C10-, C12-, and C16-MEA). To avoid high energy penalty at the regeneration step, the inventors reduced the water content of the solvent. The inventors tested various absorbent loadings (5-90 wt%) of C10-MEA in 35 g/L brine to maximize the capacity of $CO_2$ absorbed. The results show that 80 wt% C10-MEA solution reaches up to $CO_2$ loading of 8.6 wt%, approaching the gravimetric capacity of the standard MEA solution (9.5 wt%, **Fig. 3B).**

*Conclusion*

The present example demonstrates that C10-MEA was the first molecule that exhibited higher performance in brine compared with in deionized water. The longer the alkyl chain length, the higher performance in brine compared with in deionized water. Furthermore, 80 wt% C10-MEA solution reaches up to $CO_2$ loading of 8.6 wt%, approaching the gravimetric capacity of the standard MEA solution (9.5 wt%). Thus, the carbon capture efficiency of the $CO_2$ sorption of the present invention in brine is almost as efficient as the industrial standard (MEA).

**Example 4** - **Varying salinity in the $CO_2$ sorption medium**

*Aim of study*

Realizing that the ion strength of the solution plays a crucial role in water-rich systems for $CO_2$ capture, the inventors anticipated a similar effect holds for water-lean systems. Thus, the aim of this example was to investigate how changes in the salinity of the aqueous solution containing the $CO_2$ sorption medium impact $CO_2$ capture efficiency.

*Results*

The inventors subjected the 80 wt% C10-MEA to a salinity screening by preparing model aqueous $NaCl_{(aq)}$ solutions of 5, 35, 100, 175, 250, 300, and 360 (saturation point of NaCl in water) g/L NaCl concentrations as illustrated in **Fig. 4A.** With C10-MEA, high ion strength solutions were superior for $CO_2$ capture to low salinity solutions; 250 g/L salinity was optimal in terms of total $CO_2$ capture capacity (9.65 wt%) reaching the 20 wt% MEA benchmark (9.71 mmol $CO_2$ per g of absorbent). The high salt concentration provides not only a high $CO_2$ loading capacity but also in terms of absorption rate. The three solutions (250, 300, and 360 g/L) that are highest in capacity also exhibited the highest rates at 1 h of $CO_2$ absorption experiments (Fig. 4A, shaded bars). An optimal salt concentration with high $CO_2$ loading and absorption rate was at 250 g/L, which might be ascribed to effective self-aggregation, and the critical micelle formation concentration (CMC) of surfactants like amphiphile C10-MEA **(Fig. 4B).**

Salts and ions play a crucial role in influencing the behavior of surfactant molecules in water, particularly in terms of aggregation and micellization of amphiphiles. Molecular dynamic simulations on sodium dodecyl sulfate reveal that increased salt concentration enhances the packing of the surfactants, fostering aggregation at lower CMCs. Therefore, higher aggregation of surfactants results in the expulsion of water molecules, which can be explained by a more pronounced hydrophobic effect and increased entropy of the system. Based on the inventors' qualitative studies by $^1$H and $^{13}$C NMR spectroscopy (See Example 1: Qualitative $CO_2$ detection with $^{13}$C-NMR spectroscopy), the inventors presumed that NaCl concentration correlates with the rise of the carbamate (RR'N-$CO_2$)-sodium ion pairs in micellar interfacial regions, significantly reducing interfacial water volume (Fig. 4B, at a higher [NaCl]). This phenomenon arises because NaCl ions, being more hydrated, outcompete hydrophobic ammonium carbamate ion pairs. The hydrophobic effect of aliphatic chains elevates the entropy of the solution, as water at the micellar interfacial region has lower entropy than bulk water.

To shed light on this hypothesis, dynamic light scattering (DLS) experiments were conducted with C10-MEA **(Fig. 4C,** light grey). The inventors observed that $CO_2$ introduction to C10-MEA has a minimal impact on particle size distribution without any salts. In contrast, the addition of NaCl significantly increased the particle sizes to higher micellar structures (ca. 500 nm, Fig. 4C). These results suggest a unique entropy-driven $CO_2$ capture mechanism where the presence of salts contributes to the spontaneity of self-aggregation of amphiphiles. This finding is consistent with the observation that absorbents with longer alkyl chains (longer than C9) display larger differences in terms of $CO_2$ capture capacity in deionized water and brine solutions **(Fig. 3A).** The $CO_2$ sorption system of the present invention therefore has a reduced water content in high-ion strength solutions thereby generating a water-lean $CO_2$ sorption system.

*Conclusion*

This example demonstrates that for C10-MEA, the NaCl salt concentration of 250 g/L was optimal in terms of total $CO_2$ capture capacity (9.65 wt%) reaching the 20 wt% MEA benchmark (9.71 mmol $CO_2$ per g of absorbent). The high salt concentration provides not only a high $CO_2$ loading capacity but also a high absorption rate.

Furthermore, this example demonstrates that increasing the ionic strength of the sorption medium by adding salt increases the entropy of the system and contributes to the self-aggregation of amphiphiles which in turn expels water from the micelles. The $CO_2$ sorption system of the present invention therefore has a reduced water content in high-ion strength solutions thereby generating a water-lean $CO_2$ sorption system.

**Example 5** - **Testing different salt compositions**

*Aim of study*

The aim of this study was to investigate different types of salt compositions, i.e., different salts or different types of sea salt.

*Results*

The inventors performed a Hofmeister series analysis with NaCl as a neutral salt solution **(Fig. 5A).** Under the standard $CO_2$ absorption conditions (1 atm $CO_2$, 2 mL/min, room temperature), a chaotropic salt, NaI, showed a poorer performance due to micelle dissolution (salting-in) while kosmotropic $NaSO_4$ showed superior performance due to micelle forming (salting-out). These results further confirm the $CO_2$-induced micelle formation and its effect on the capture rate and the capacity.

To assess the energy cost of entropy-driven carbon capture, the inventors first conducted calorimetry to determine the heat of absorption of amphiphile C10-MEA in different concentrations of salts (data not shown). Theoretically, it should exhibit a smaller heat of absorption than that of the benchmark water-rich solution (MEA in 70-80 wt% $H_2O$). The inventors repeatedly injected small amounts of $CO_2$ (20 μL, 0.16 equiv. to C10-MEA) and measured the energy input of the calorimeter to match the energy released in the exothermic capture process. At 25 °C and ambient pressure, the inventors obtained $\Delta H_{abs}$ = -63.5 kJ/mol in NaCl 35 g/L and $\Delta H_{abs}$ = -78.0 kJ/mol for a 250 g/L brine solution system, which is in good agreement with their respective performances. These values fall within the range for water-lean systems and are significantly lower than $\Delta H_{abs}$ of the benchmark MEA system (80-100 kJ/mol), implying a reduced energy penalty at desorption step in the $CO_2$ sorption system of the present invention. The inventors then performed desorption experiments with C10-MEA in brine, which showed complete desorption at 50 °C under the $N_2$ stream within 30 min (**Fig. 5B**). Thermal gravimetric analysis also confirmed the facile desorption of water and $CO_2$ starting at approximately 70 °C (data not shown).

The inventors also demonstrated $CO_2$ capture using C10-MEA in real seawater: samples were collected (ca. 12 - 45 g/L salinity) and tested for $CO_2$ capture (**Fig. 5C**). The experimental data displays comparable gravimetric capture

capacity relative to other model saline solutions, achieving up to 8 wt% $CO_2$ absorption. Regardless of salinity and the composition of real seawater samples, the inventors detected 4-6 wt% of $CO_2$ absorption in the water-lean system of the present invention, highlighting the robustness of C10-MEA for entropy-driven $CO_2$ capture. For practical application, it is noteworthy here that C10-MEA exhibits insolubility in DI water upon exposure to $CO_2$. A homogeneous solution of C10-MEA was observed in brine without significant foaming during $CO_2$ capture experiments **(Fig. 5D).** Foaming during operation poses a significant challenge for $CO_2$ sorption systems of the prior art, especially for water-based amine sorption systems. Foaming leads to poor process performance by affecting capture efficiency via column flooding, potential sorbent loss due to foam carryover, incomplete sorbent regeneration, and variations in column pressure. Consequently, most water-based sorption mediums require control measures such as mechanical filtration, solution reclamation, or antifoam additives. However, antifoam additives are not ideal as they do not remove contaminants from the solvent or permanently prevent foaming (Heldebrant, D.J., *et al* (2017)). Thus, the fact that the sorption medium of the present invention in saltwater does not lead to significant foaming is a significant advantage. This implies that alkylated MEAs are applicable for carbon dioxide removal on a larger scale.

*Conclusion*

The present example demonstrates that salt compositions other than NaCl can be used in the $CO_2$ sorption system of the present invention. Both chaotropic and kosmotropic salt could be used in the present invention thereby demonstrating that the type of salt is not as important as the ionic strength of the solution when capturing $CO_2$ using the $CO_2$ sorption medium of the present invention in brine. The present inventors also demonstrated that different types of seawater could be used in the $CO_2$ sorption system of the present invention.

**Example 6** - **Solid alkylated MEA as a $CO_2$ sorbent**

*Aim of study*

In the previous examples, the $CO_2$ sorption medium of the present invention has been used in aqueous solutions comprising salt. The aim of this example was therefore to test whether the $CO_2$ sorption medium of the present invention could be used in a solid form to capture $CO_2$.

*Results*

The hydrophobic MEA sorbent, C10-MEA, is a white solid with a low melting point (40 °C) that reversibly sorbs $CO_2$ at ambient temperatures in the form of ammonium/carbamate pair. Upon $CO_2$ capture, C10-MEA forms a hydrogen-bonded hydrophobic framework that significantly increases in crystallinity upon $CO_2$ binding. The sorbent reaches a high $CO_2$ loading of 11 wt%, corresponding to 2.5 mmol/g in a 2:1 amine to $CO_2$ stoichiometry (**Fig. 6A**), outperforming most state-of-the-art sold sorbents. When loaded with $CO_2$ the C10-MEA sorbent molecules completely reorganize in a hydrogen-bonded organic framework to accommodate $CO_2$ and hydrophobic interaction, giving the sample increased crystallinity and structural rigidity. The ammonium carbamate pair forms a unit cell of 4 pair units (**Fig. 6B**), but the units are not identical. The opposite units are the same while the adjacent ones are different. One set of units orients so that hydrophobic tails are facing opposite directions while the other set does it so that the tails are facing the same direction. The morphological change induced by $CO_2$ capture is reversible (data not shown). With a 100 % $CO_2$ source in TGA, the inventors obtained full $CO_2$ loading of C10-MEA at 30 °C. Additionally, the sorbent releases $CO_2$ upon exposure to $N_2$ at 30 °C (**Fig. 7**) demonstrating energetically favourable desorption with minimal temperature swing, resulting in a low energy demand for regeneration. A mild regeneration step is essential for maintaining sorbent durability by minimizing degradation pathways and reducing the overall operating cost of the process.

The inventors tested the sorbent's performance at flue gas concentrations (5% $CO_2$ in $N_2$) and obtained full sorption/release in 26 cycles. While sorption was practically identical at 30 °C, the desorption at 30 °C took significantly longer (100 min). To achieve an equally rapid desorption the inventors had to supply more heat by increasing the temperature to 40 °C (**Fig. 8A**). The inventors further tested the sorbent at an even lower $CO_2$ concentration, 0.58% $CO_2$. The sorption at 30 °C was significantly slower which is expected with such a dilute gas source but interestingly, even at 40 °C it took 90 minutes to fully desorb (**Fig. 8B**). The inventors postulated that there is a dependency of the desorption conditions on the $CO_2$ concentrations in the sorption process. The fully loaded states of the sorbent could not be identical since some required elevated temperatures and prolonged time to fully release $CO_2$, which meant that there was a $CO_2$-induced structural change occurring during the sorption, and the concentration of $CO_2$ dictated the extension of this change.

The inventors further studied other alkylated hydrophobic versions of MEA, namely C12-MEA, C14-MEA, and C16-MEA. They all bind $CO_2$ reversibly and undergo morphological changes along the way. **Fig. 9A** shows sorption curves

compared with C10-MEA which is superior in capacity, but rate-wise falls short of C14-MEA which reaches maximum sorption capacity much quicker. Since they are larger molecules, it makes sense that they sorb less than C10-MEA but oddly exhibit similar total capacities between different chain lengths. **Fig. 9B** shows the respective desorption profiles at ambient conditions. There is a clear trend where increased chain length leads to slower/energy-demanding desorption. This trend could be explained by increased packing and crystallinity with increasing alkyl chain length, and since $CO_2$ is a part of that crystal structure the energy demand to release it is higher.

Next, the inventors tested the temperature effect on the sorption process. As expected, the total capacity decreased with increased temperature **(Fig. 10A)** but interestingly, the shape of the sorption curve switches from an S-shaped curve for temperatures below 50 °C to a Langmuir-type curve for temperatures above 50 °C. This indicates that increasing temperature affects the packing and crystallinity, deforming the hydrogen-bonded organic framework (HOF) and lowering the total $CO_2$ uptake capacity. Lastly, the TGA decomposition pattern shows that the 1 % $CO_2$-loaded C10-MEA sample is a thermally more stable structure than the one loaded with 100 % $CO_2$ **(Fig. 10B).** This finding is complementary to the desorption result where 1 % loaded sample required more energy to release $CO_2$ further confirming the existence of $CO_2$ HOF.

To determine the recyclability and practical pressurization of $CO_2$ for applications (utilization and sequestration), $CO_2$ desorption test was conducted under 100 % $CO_2$ by elevating temperature (**Fig. 11**). Owing to the temperature sensitivity of the flexible organic crystal, facile desorption was detected starting at 60 °C, which manifest the utility of C10-MEA neat for $CO_2$ capture and release by using waste heat. Complete desorption was detected by the system reaching the temperature of 65 °C, which is significantly lower than conventional amine-based solvents.

*Conclusion*

The present example demonstrates that the $CO_2$ sorbent in a solid-state exemplified using C10-MEA, C12-MEA and C16-MEA can sorb and desorb $CO_2$ in a cyclic process. The inventors demonstrated a novel class of solid-state $CO_2$-responsive hydrogen-bonded hydrophobic frameworks that undergo reversible morphological changes upon binding $CO_2$. The $CO_2$ sorbents are excellent capture materials with high capture capacity (2.5 mmol/g) and mild desorption conditions, generating a rich $CO_2$ source at >60 °C, outperforming most state-of-the-art porous adsorbents in its class that require over 100 °C with either $N_2$ or vacuum conditions. Given the low energy demand of the system, and synthetic and operational simplicity these materials is an ideal replacement of existing capture technologies pushing for a paradigm shift in transitioning away from inefficient aqueous technologies for PCC.

**References**

- US20160250591 A1
- EP4035760 A1
- US8119091B2
- WO2004089512 A1
- US7157554 B2
- Heldebrant, D.J., et al.: Water-Lean Solvents for Post-Combustion CO2 Capture: Fundamentals, Uncertainties, Opportunities, and Outlook. Chem Rev. 2017 Jul 26;117(14):9594-9624


**Claims**

**1.** A method for separating $CO_2$ from a gas mixture comprising $CO_2$, said method comprising the steps of:

a) providing a gas mixture comprising $CO_2$;
b) contacting the gas mixture with at least one sorption medium under conditions suitable for the sorption medium to sorb the $CO_2$ to obtain a $CO_2$-enriched sorption medium;
c) desorbing $CO_2$ from the $CO_2$-enriched sorption medium under conditions suitable for the $CO_2$-enriched sorption medium to desorb $CO_2$ to regenerate the sorption medium and obtain $CO_2$;

wherein said sorption medium comprises a compound of formula (I):

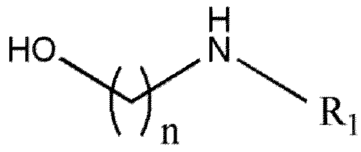 (I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

**2.** The method according to claim 1, wherein n is an integer selected from the range of 2-4, preferably 2 or 3, more preferably 2.

**3.** The method according to any one of the preceding claims, wherein the compound of formula (I) is:

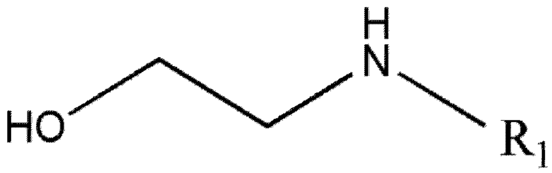

wherein $R_1$ is selected from the group consisting of optionally substituted $C_6$-$C_{25}$ alkyl, optionally substituted $C_6$-$C_{25}$ alkene, and optionally substituted $C_6$-$C_{25}$ alkyne.

**4.** The method according to any one of the preceding claims, wherein $R_1$ is selected from the group consisting of an optionally substituted $C_8$-$C_{20}$-alkyl, - alkene, and -alkyne, such as an optionally substituted $C_9$-$C_{18}$-alkyl, -alkene, and - alkyne, such as an optionally substituted $C_{10}$-$C_{16}$-alkyl, -alkene, and -alkyne, such as an optionally substituted $C_{10}$-$C_{14}$-alkyl, -alkene, and -alkyne, such as an optionally substituted $C_{10}$-$C_{12}$-alkyl, -alkene, and -alkyne, preferably an optionally substituted $C_{10}$-alkyl, -alkene, and -alkyne.

**5.** The method according to any one of the preceding claims, wherein the substituent on the optionally substituted $C_6$-$C_{25}$ alkyl, optionally substituted $C_6$-$C_{25}$ alkene, and optionally substituted $C_6$-$C_{25}$ alkyne is selected from the group consisting of a halide, $C_1$-$C_8$ alkyl, $C_2$-$C_8$ alkene, and $C_2$-$C_8$ alkyne.

**6.** The method according to any one of the preceding claims, wherein the sorption medium further comprises water.

**7.** The method according to claim 6, wherein the sorption medium comprises less than 90 % (w/w) water, such as less than 85 % (w/w) water, such as less than 80 % (w/w) water, such as less than 75 % (w/w) water, such as less than 70 % (w/w) water, such as less than 65 % (w/w) water, such as less than 60 % (w/w) water, such as less than 50 % (w/w) water, preferably less than 40 % (w/w) water, more preferably less than 30 % (w/w) water, most preferably less than 20 % (w/w) water relative to the compound of formula (I).

**8.** The method according to any one of the preceding claims, wherein the sorption medium further comprises at least one salt, preferably an inorganic salt.

**9.** The method according to any one of the preceding claims, wherein ionic strength of the sorption medium is in the range of 0.1 mol/L to 6.2 mol/L, such as 0.5 mol/L to 6 mol/L, such as 1 mol/L to 5.8 mol/L, such as 1.5 mol/L to 5.5 mol/L, such as 2 mol/L to 5.3 mol/L, such as preferably 2.5 mol/L to 5 mol/L, such as 3 mol/L to 4.8 mol/L, such as 3.5 mol/L to 4.6 mol/L, more preferably 4.0 to 4.5 mol/L, such as 4.2 mol/L to 4.4 mol/L, most preferably 4.3 mol/L.

**10.** The method according to any one of the preceding claims, wherein the sorption medium comprises a mixture of compounds of formula (I).

**11.** The method according to any one of the preceding claims, wherein the gas mixture is selected from the group consisting of biogas, post-combustion gas mixture, and flue gas.

**12.** The method according to any one of the preceding claims, wherein the $CO_2$ concentration in the gas mixture is at least 1,000 ppm, such as at least 1,200 ppm, at least 1,500 ppm, at least 1,700 ppm, such as at least 2,000 ppm, such as at least 2,500 ppm, such as at least 3,000 ppm, such as at least 3,500 ppm, such as at least 4,000 ppm, preferably in the range of 1,000 ppm to 1,000,000 ppm.

**13.** The method according to any one of the preceding claims, wherein the temperature in step b) is below 60 °C, such as below 50 °C, such as below 40 °C, such as in the range of 0 °C to 60 °C, such as in the range of 5 °C to 50 °C, such as in the range of 10 °C to 40 °C, such as in the range of 15 °C to 30 °C, such as preferably in the range of 15 °C to 25 °C.

**14.** The method according to any one of the preceding claims, wherein the temperature in step c) is above 20 °C, such as above 25 °C, such as above 30 °C, preferably above 40 °C, such as in the range of 20 °C to 100 °C, such as in the range of 25 °C to 95 °C, such as in the range of 30 °C to 90 °C, such as preferably in the range of 40 °C to 80 °C, such as more preferably in the range of 45 °C to 70 °C, such as in the range of 50 °C to 65 °C.

**15.** Use of a compound of formula (I):

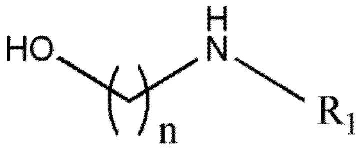
(I)

wherein

n is an integer selected from the range of 2-6, and
$R_1$ is selected from the group consisting of optionally substituted $C_6$-$C_{25}$ alkyl, optionally substituted $C_6$-$C_{25}$ alkene, and optionally substituted $C_6$-$C_{25}$ alkyne,

to separate $CO_2$ from a gas mixture comprising $CO_2$.

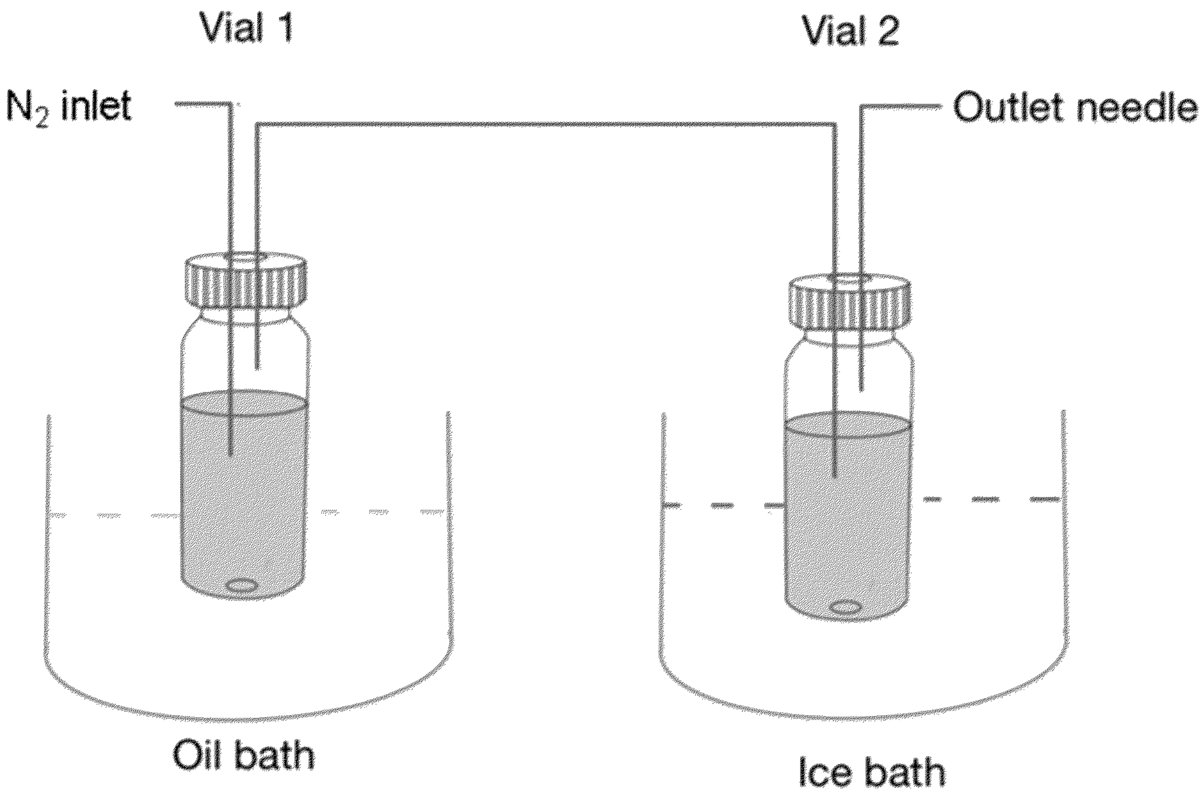


Fig. 1

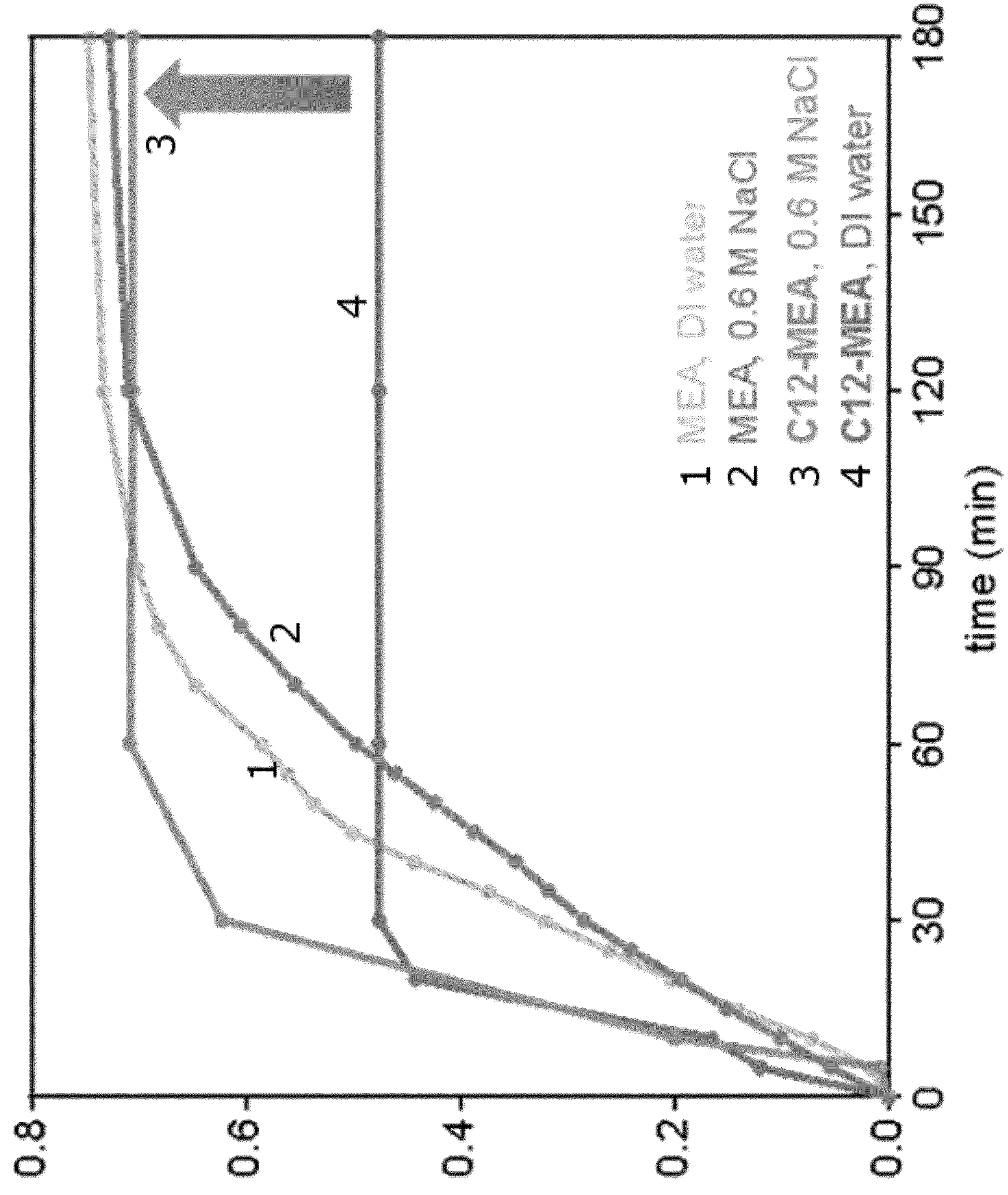

CO2 loading (mol:mol)
0.0
0.2
0.4
0.6
0.8
time (min)
0
30
60
90
120
150
180
1 MEA, DI water
2 MEA, 0.6 M NaCl
3 C12-MEA, 0.6 M NaCl
4 C12-MEA, DI water
1
2
3
4


Fig. 2

A)

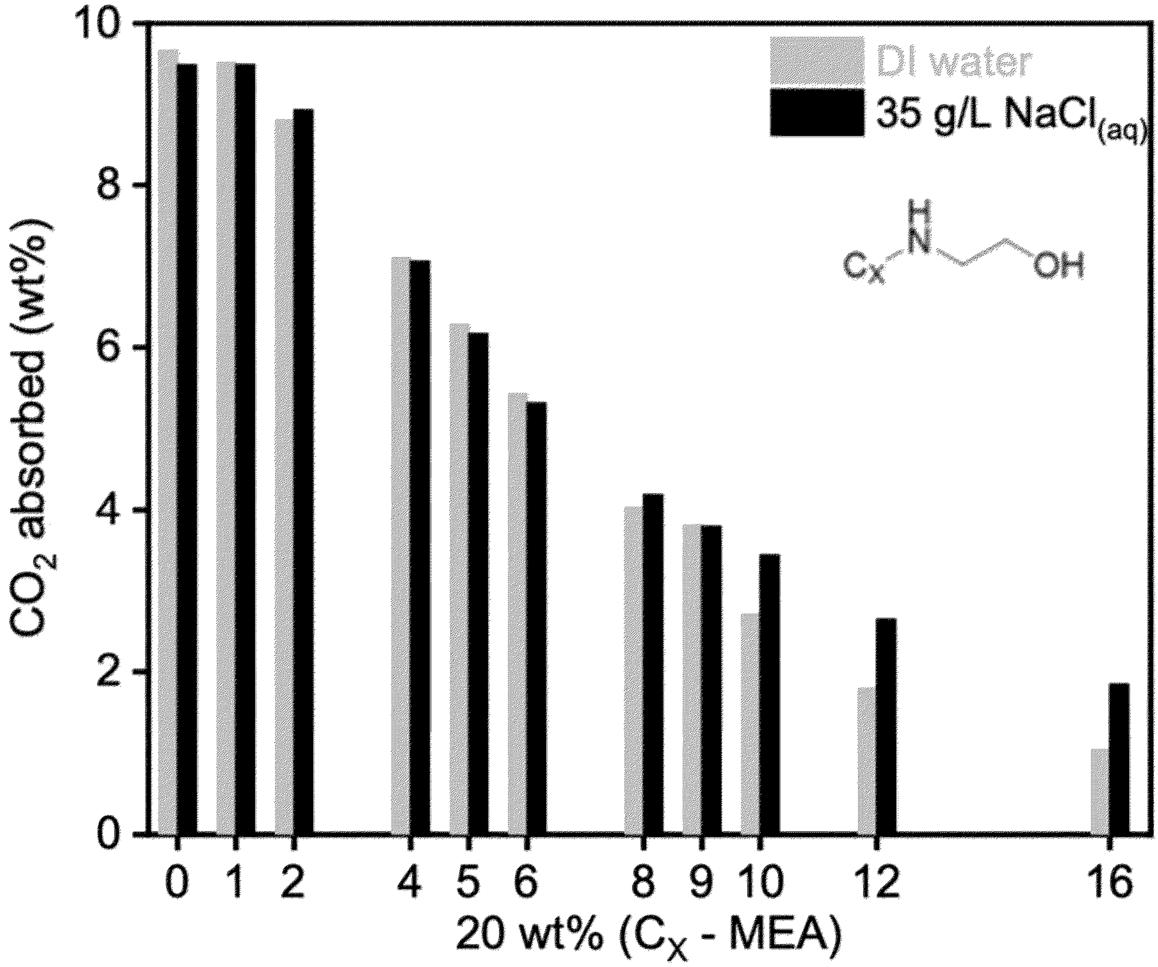
DI water
35 g/L $NaCl_{(aq)}$
$CO_2$ absorbed (wt%)
0
2
4
6
8
10
0 1 2 4 5 6 8 9 10 12 16
20 wt% ($C_X$ - MEA)

Fig. 3A

B)

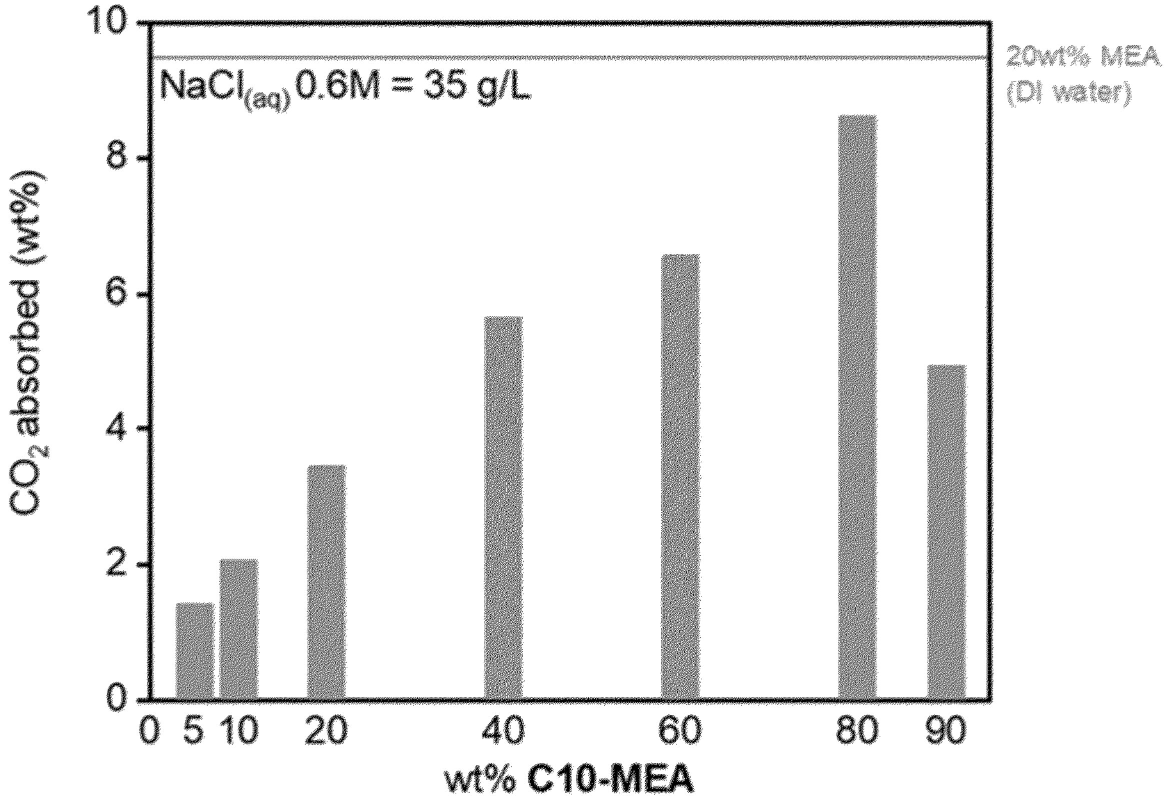
10
8
6
4
2
0
$CO_2$ absorbed (wt%)
NaCl(aq) 0.6M = 35 g/L
20wt% MEA
(DI water)
0 5 10 20 40 60 80 90
wt% C10-MEA

Fig. 3B

A)

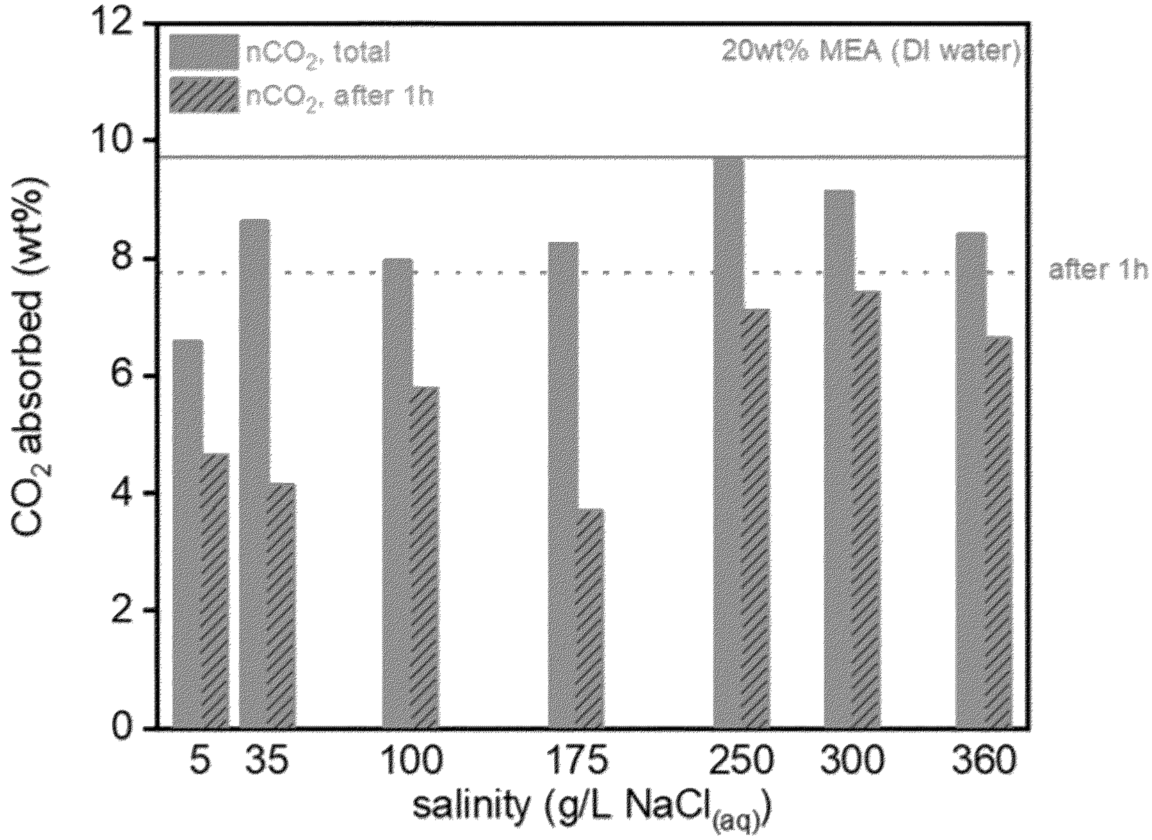
nCO2, total
nCO2, after 1h
20wt% MEA (DI water)
after 1h
CO2 absorbed (wt%)
12
10
8
6
4
2
0
5
35
100
175
250
300
360
salinity (g/L NaCl(aq))

Fig. 4A

B)

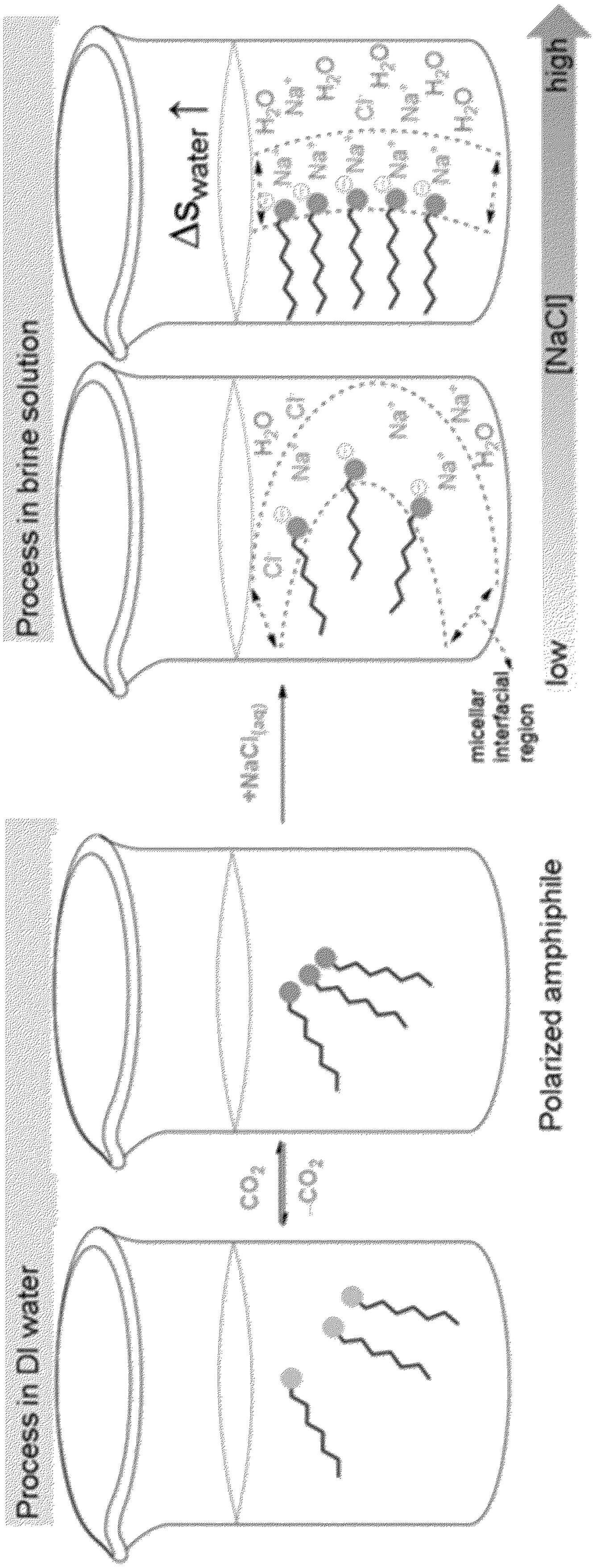
Process in DI water
$CO_2$
$-CO_2$
Polarized amphiphile
$+NaCl_{(aq)}$
Process in brine solution
$\Delta S_{water}$ ↑
$H_2O$
$Na^+$
$Cl^-$
micellar interfacial region
low
[NaCl]
high

Fig. 4B

C)

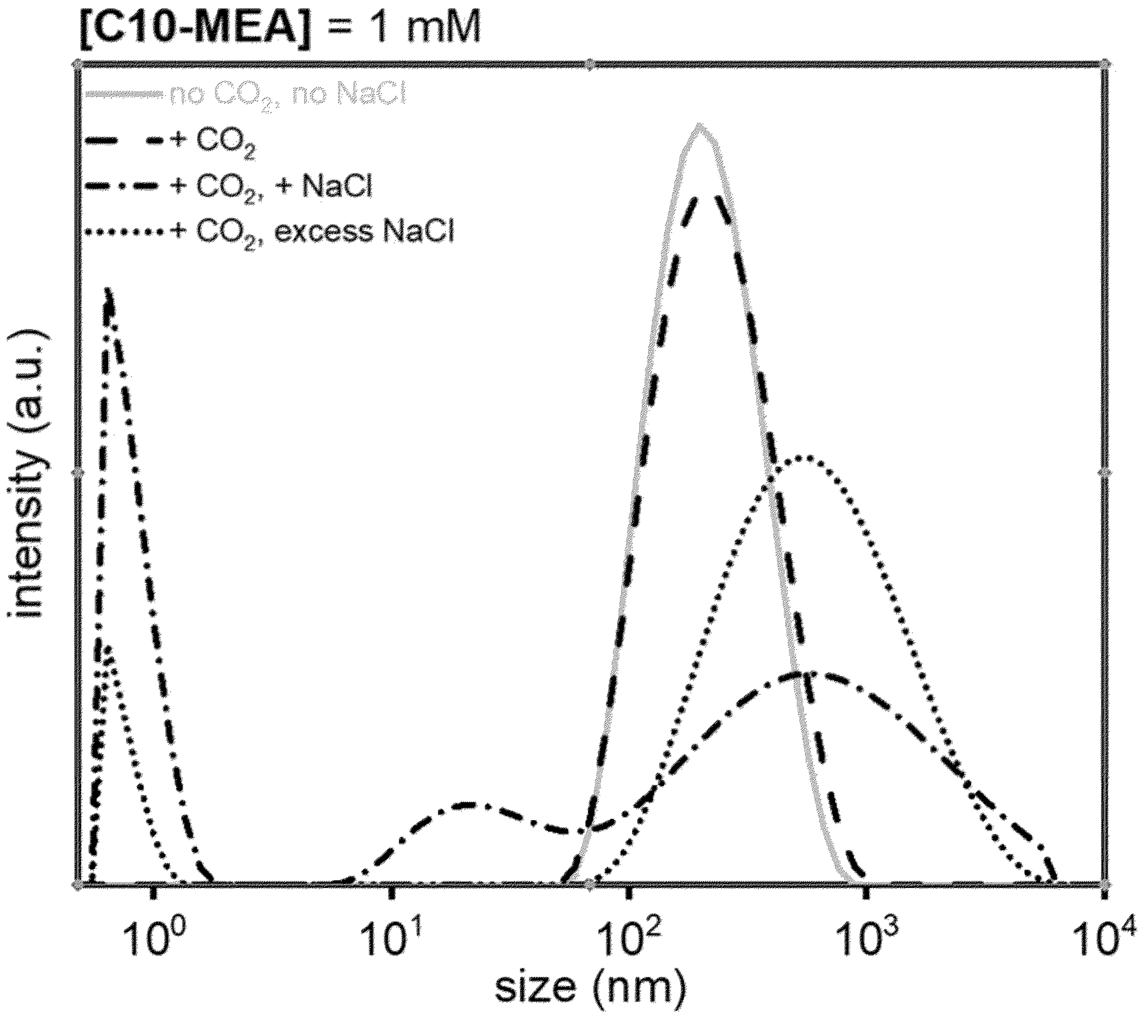
[C10-MEA] = 1 mM
no CO2, no NaCl
+ CO2
+ CO2, + NaCl
+ CO2, excess NaCl
intensity (a.u.)
10^0
10^1
10^2
10^3
10^4
size (nm)

Fig. 4C

A)

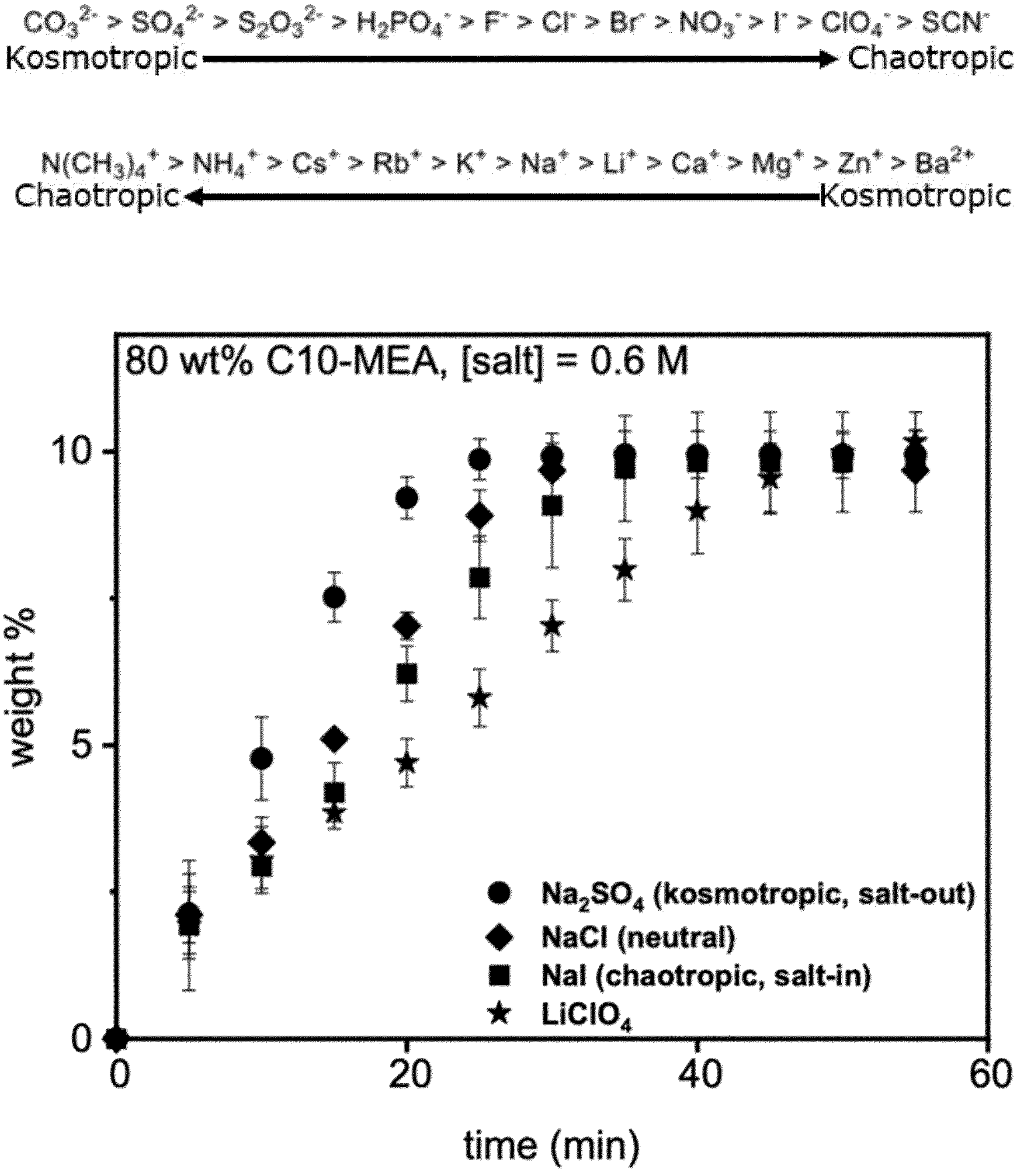

CO3 2- > SO4 2- > S2O3 2- > H2PO4 - > F- > Cl- > Br- > NO3 - > I- > ClO4 - > SCN-
Kosmotropic
Chaotropic
N(CH3)4 + > NH4 + > Cs+ > Rb+ > K+ > Na+ > Li+ > Ca+ > Mg+ > Zn+ > Ba2+
Chaotropic
Kosmotropic
80 wt% C10-MEA, [salt] = 0.6 M
weight %
time (min)
0
5
10
0
20
40
60
Na2SO4 (kosmotropic, salt-out)
NaCl (neutral)
NaI (chaotropic, salt-in)
LiClO4


Fig. 5A

B)

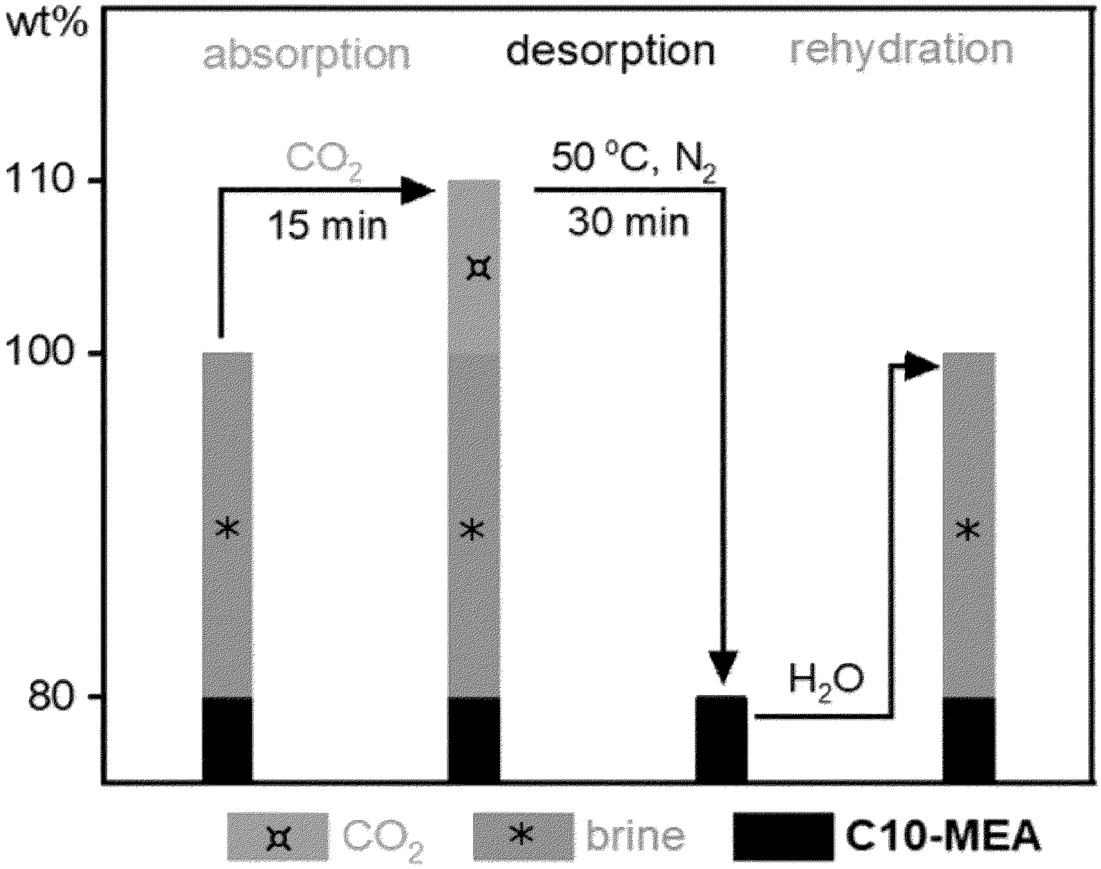
wt%
absorption
desorption
rehydration
110
100
80
CO2
15 min
50 °C, N2
30 min
H2O
CO2
brine
C10-MEA

Fig. 5B

C)

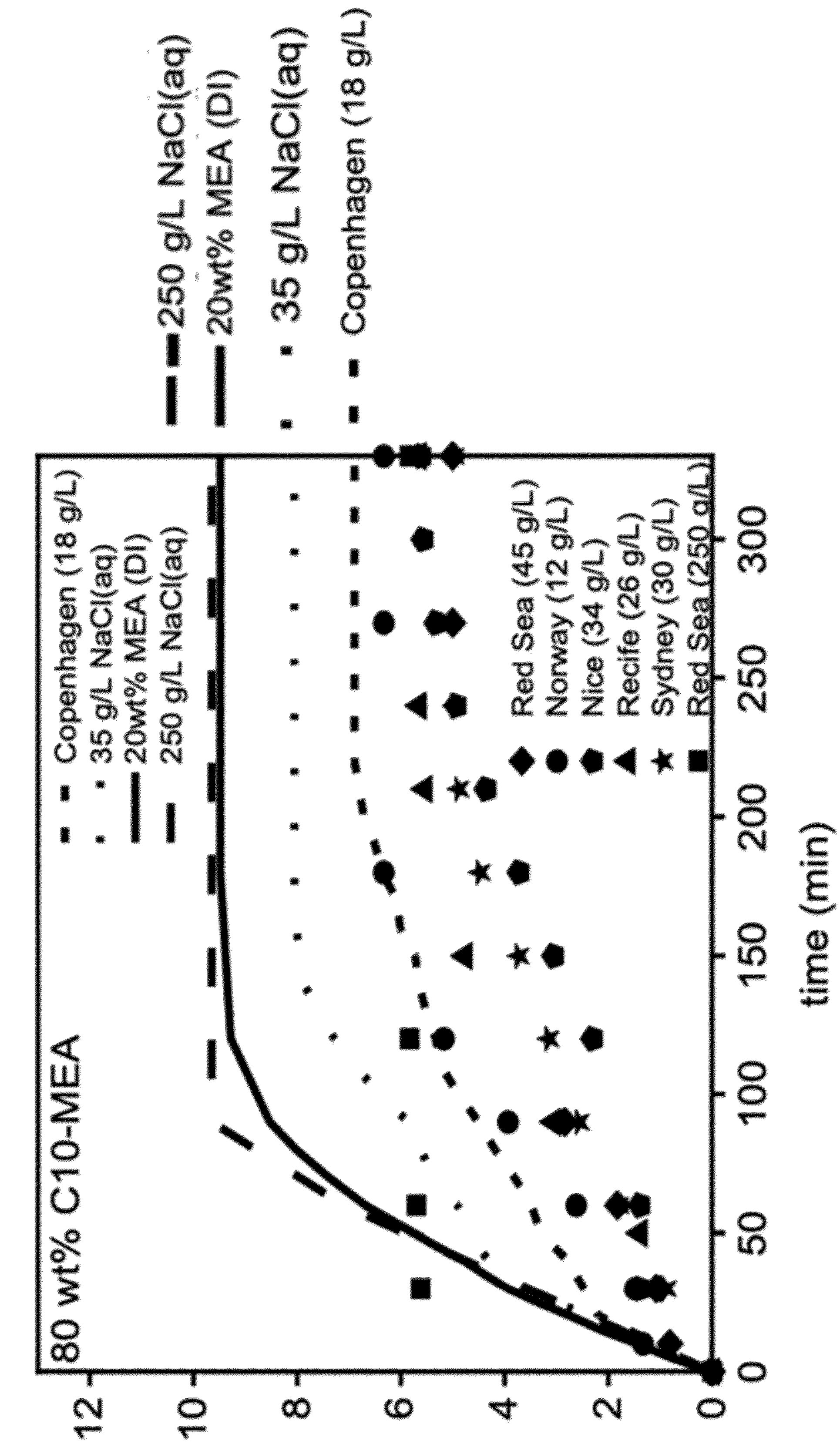

80 wt% C10-MEA
Copenhagen (18 g/L)
35 g/L NaCl(aq)
20wt% MEA (DI)
250 g/L NaCl(aq)
Red Sea (45 g/L)
Norway (12 g/L)
Nice (34 g/L)
Recife (26 g/L)
Sydney (30 g/L)
Red Sea (250 g/L)
wt% of absorbed $CO_2$
time (min)
0
2
4
6
8
10
12
0
50
100
150
200
250
300
250 g/L NaCl(aq)
20wt% MEA (DI)
35 g/L NaCl(aq)
Copenhagen (18 g/L)


Fig. 5C

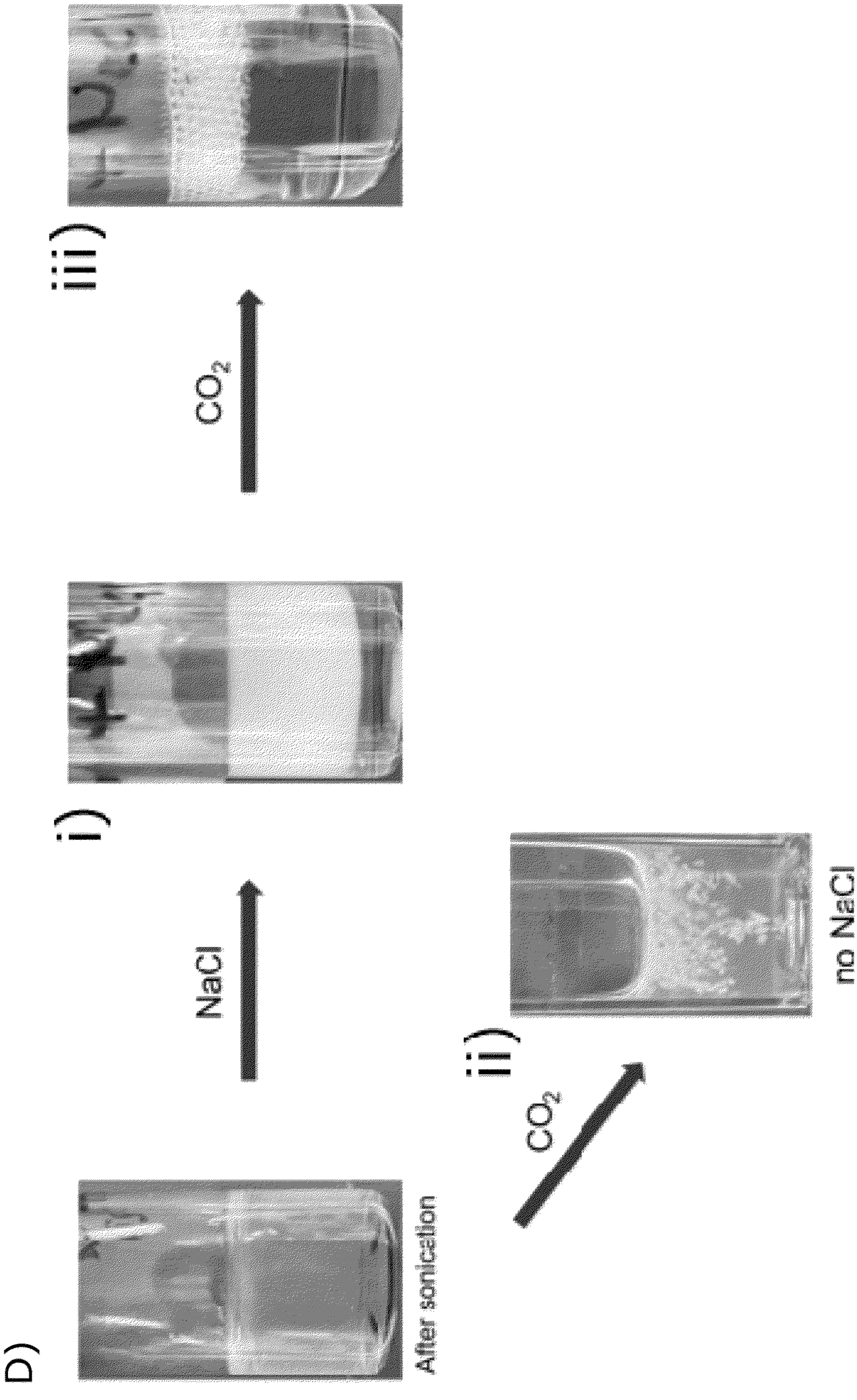


Fig. 5D

A)

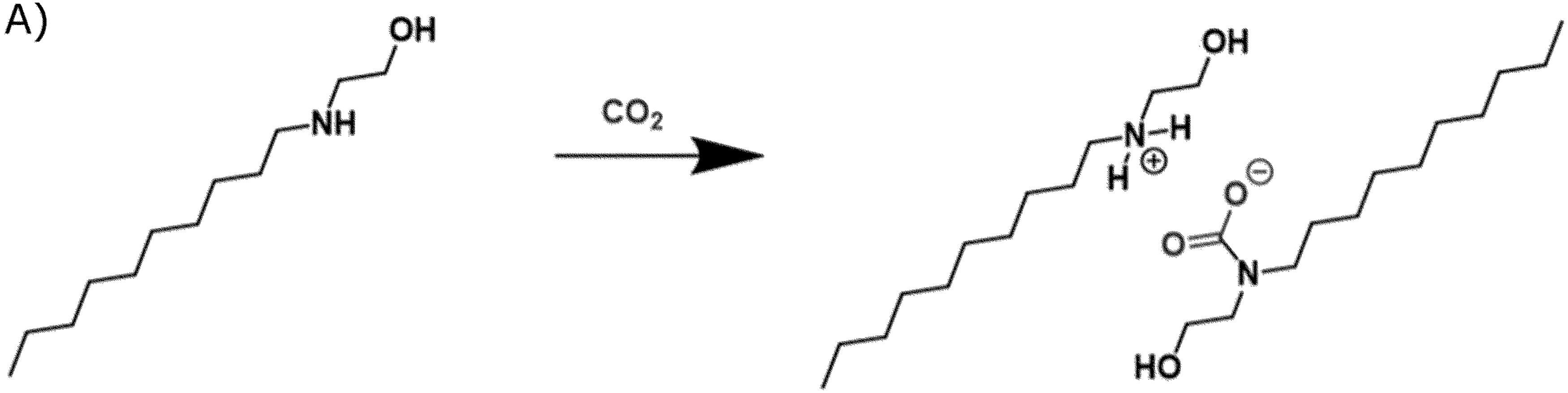


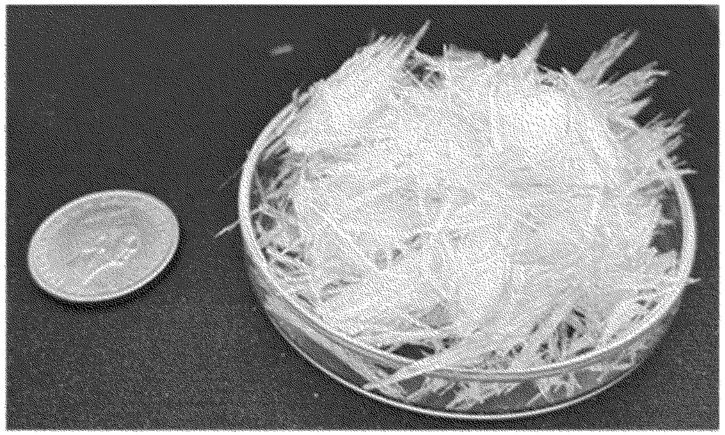

Full 0.5 mol:mol loading
11 wt% (2.5 mmol/g*)

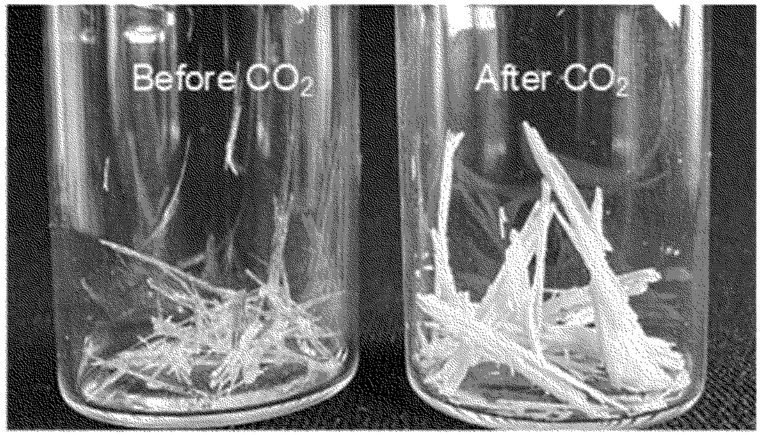


Fig. 6A

B)

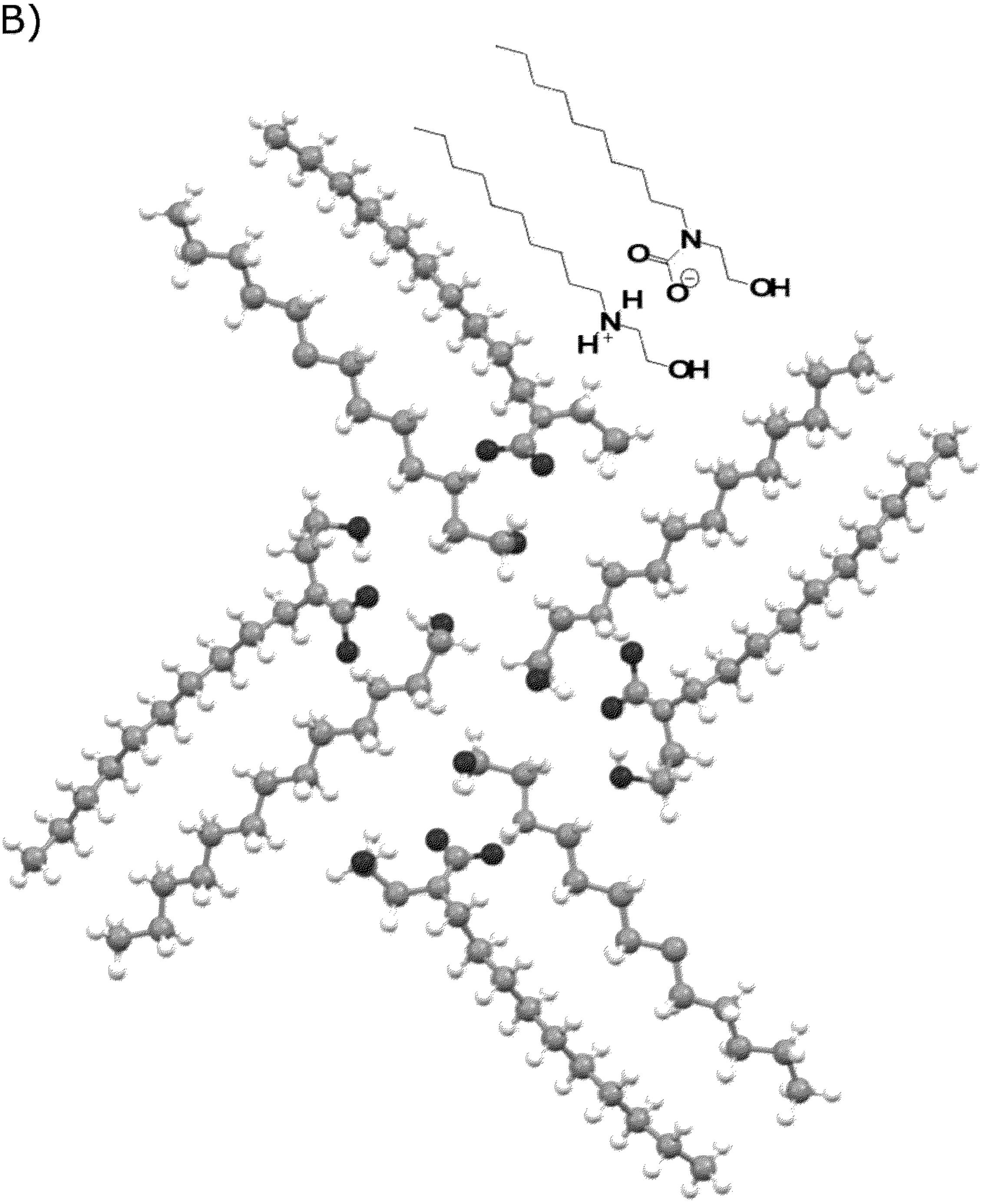

Fig. 6B

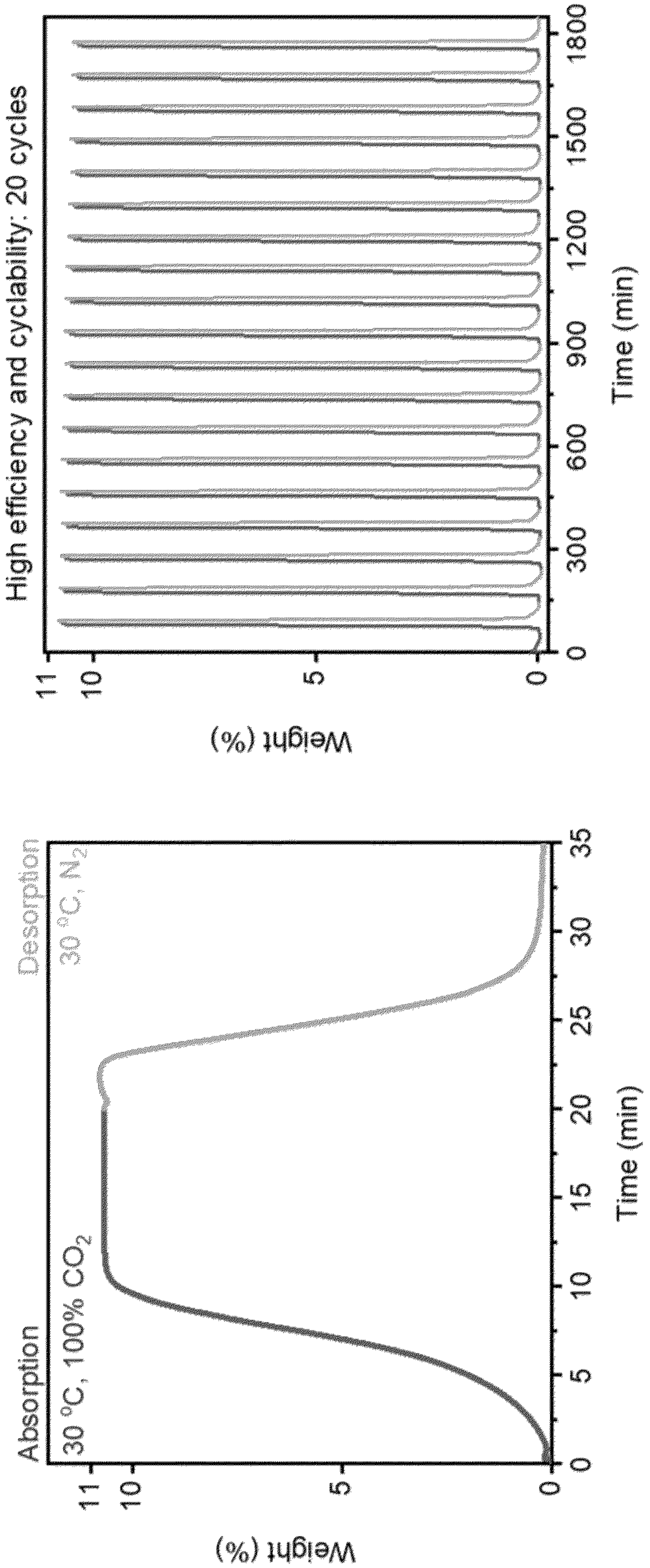
High efficiency and cyclability: 20 cycles
Weight (%)
Time (min)
Absorption
30 °C, 100% $CO_2$
Desorption
30 °C, $N_2$

Fig. 7

A)

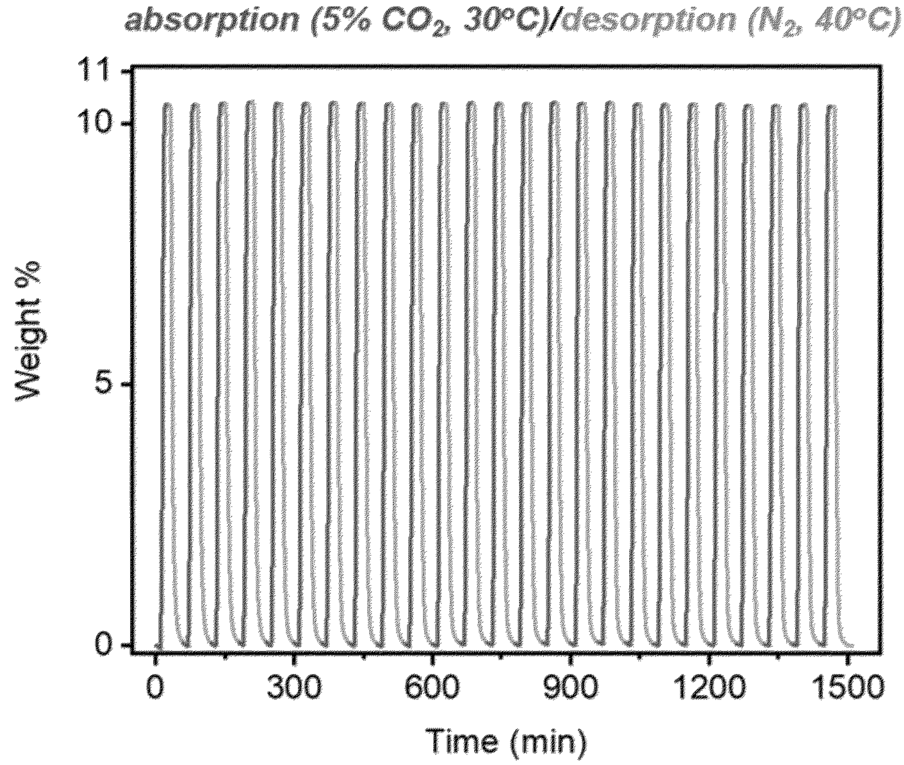
absorption (5% CO2, 30°C)/desorption (N2, 40°C)
Weight %
Time (min)

B)

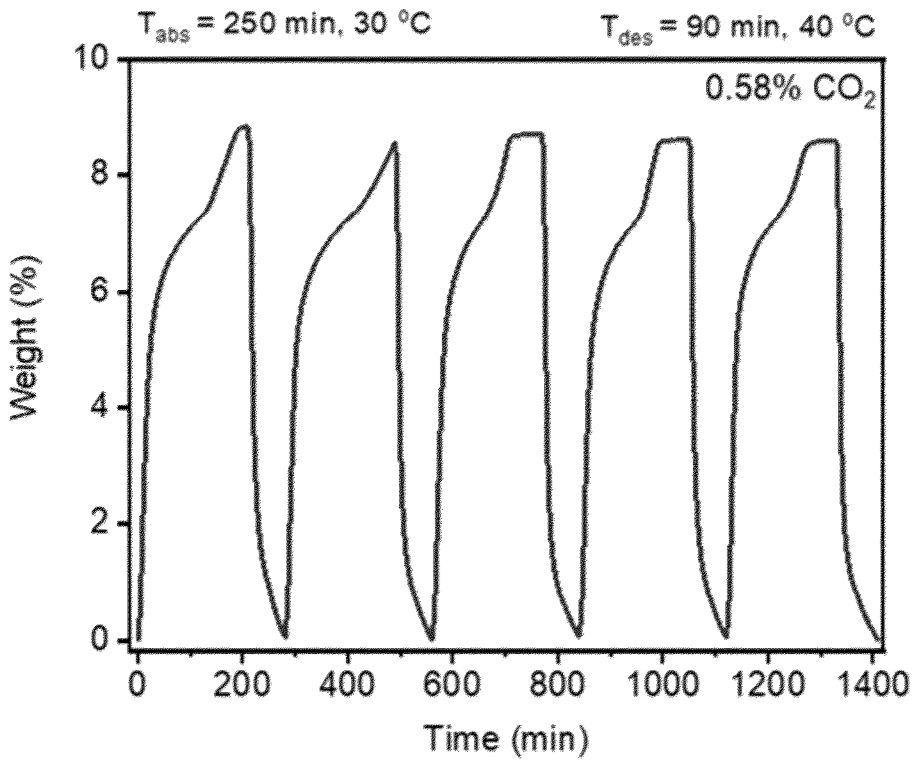
Tabs = 250 min, 30 °C
Tdes = 90 min, 40 °C
0.58% CO2
Weight (%)
Time (min)

Fig. 8

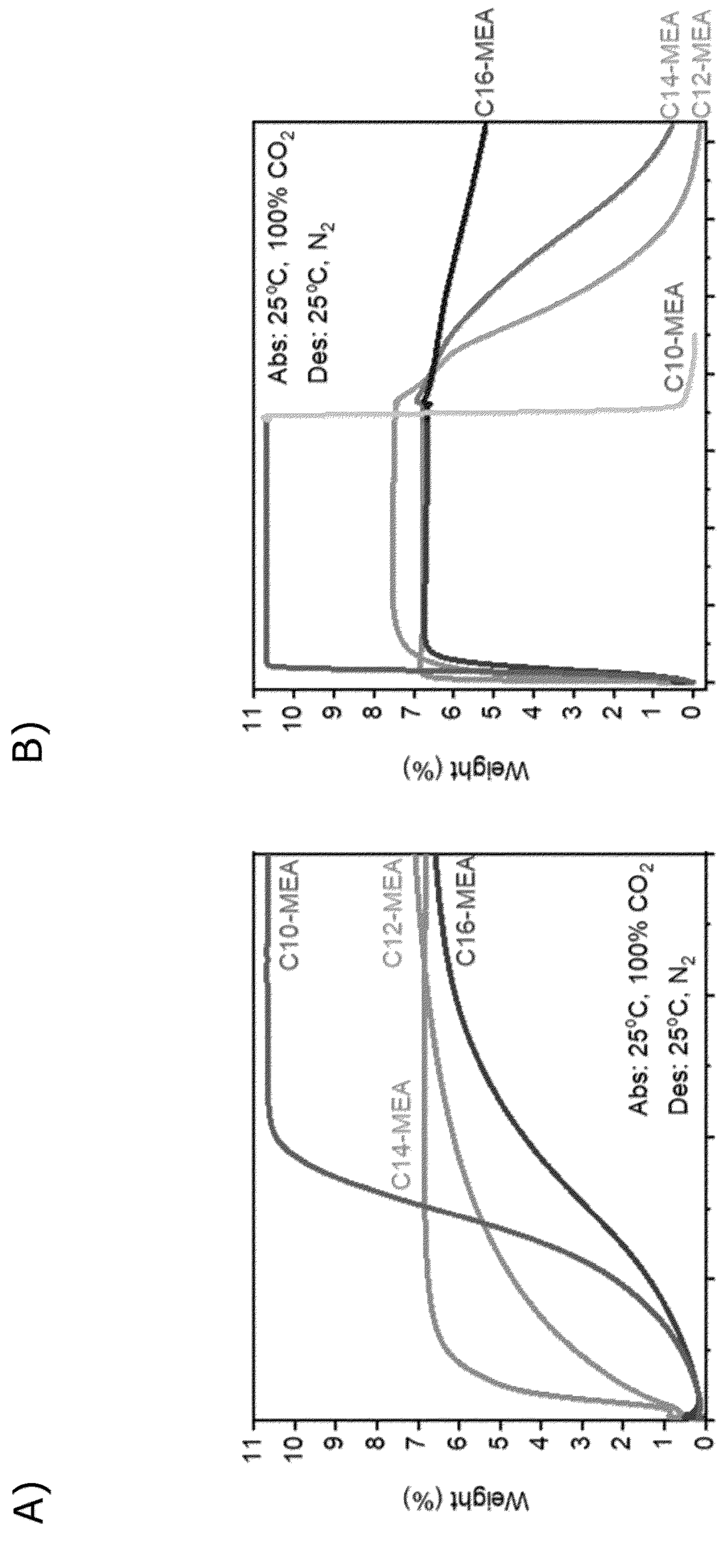
A)
B)
Weight (%)
Time (min)
Abs: 25°C, 100% $CO_2$
Des: 25°C, $N_2$
C10-MEA
C12-MEA
C14-MEA
C16-MEA
0
1
2
3
4
5
6
7
8
9
10
11
0
5
10
15
20
50
100
150
200
250
300
350

Fig. 9

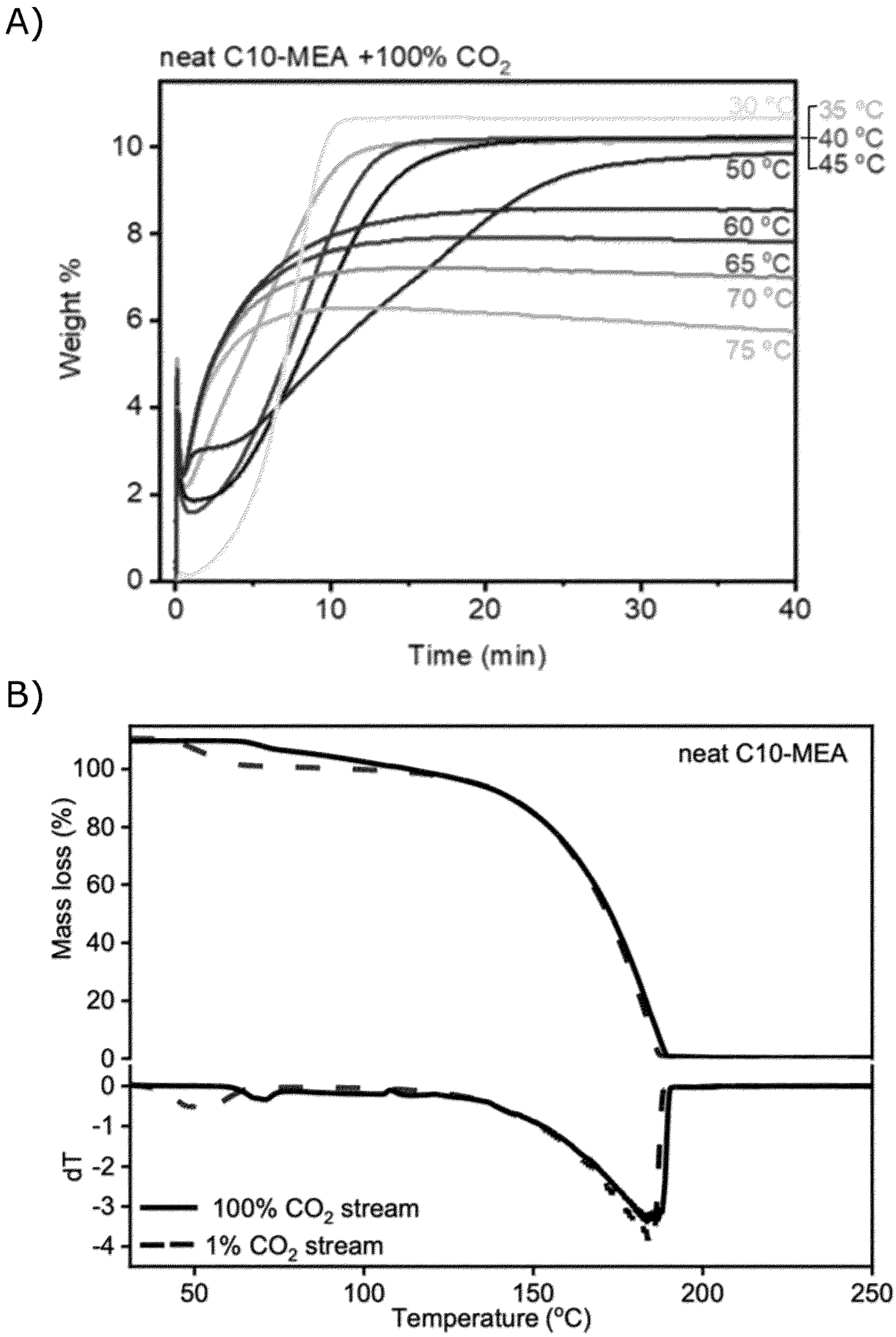
A)
neat C10-MEA +100% $CO_2$
Weight %
Time (min)
30 °C
35 °C
40 °C
45 °C
50 °C
60 °C
65 °C
70 °C
75 °C
0
2
4
6
8
10
0
10
20
30
40
B)
neat C10-MEA
Mass loss (%)
0
20
40
60
80
100
dT
0
-1
-2
-3
-4
100% $CO_2$ stream
1% $CO_2$ stream
50
100
150
200
250
Temperature (°C)

Fig. 10

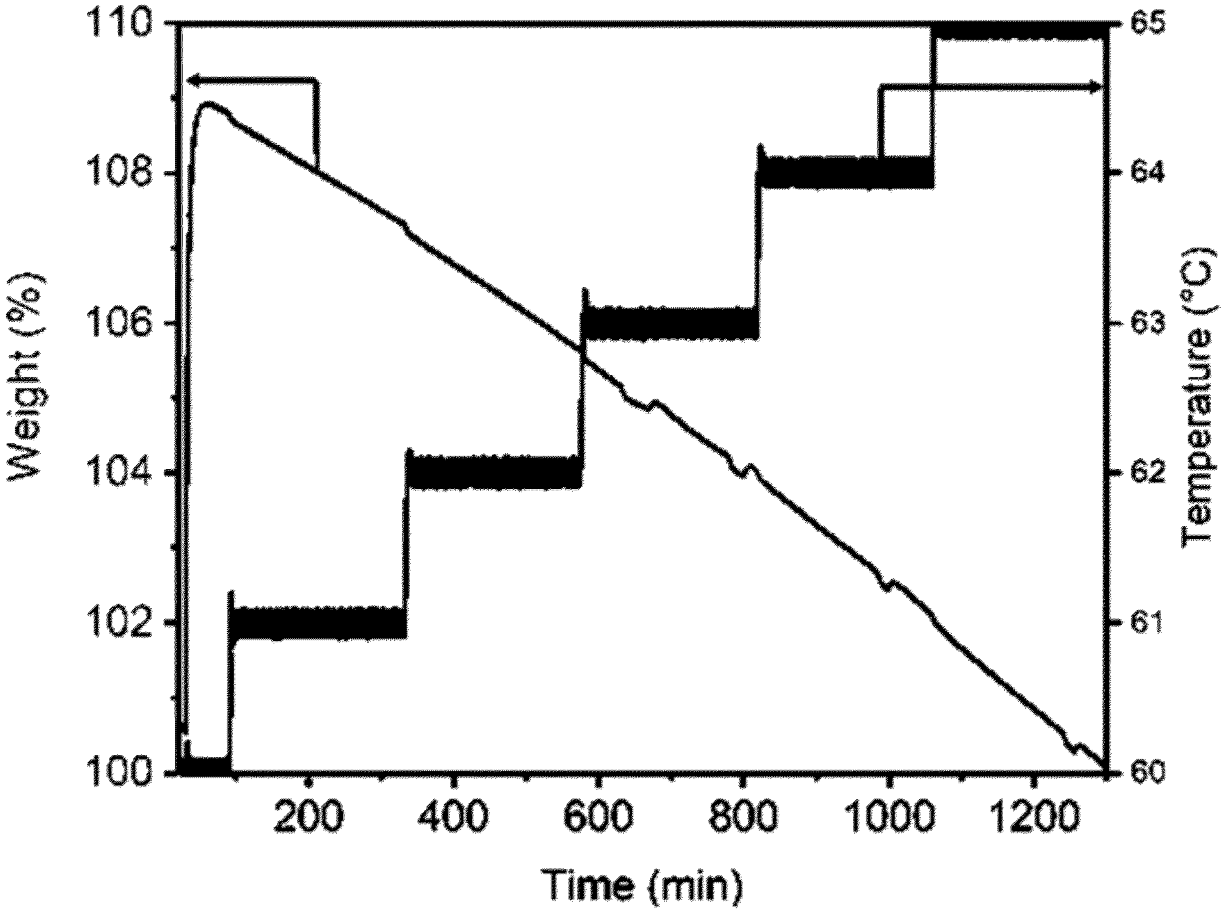
110
108
106
104
102
100
Weight (%)
200
400
600
800
1000
1200
Time (min)
65
64
63
62
61
60
Temperature (°C)

Fig. 11

Europäisches Patentamt
European Patent Office
Office européen des brevets

# EUROPEAN SEARCH REPORT

Application Number
EP 24 19 6465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 802 150 B2 (UNIV-INDUSTRY COOP FOUND OF KYUNG HEE UNIV [KR]) 31 October 2017 (2017-10-31) * claims 1,3,6,7,9; examples 7,9-17 * | 1-7, 10-15 | INV. B01D53/62 B01D53/04 B01D53/14 |
| X<br>Y | WO 2014/104789 A1 (UNIV KYUNG HEE UNIV IND COOP GROUP [KR]) 3 July 2014 (2014-07-03) * claims 1,6,10,12 * | 1-4,6,7, 11-15<br>8,9 | |
| Y | KR 2012 0032310 A (UNIV YONSEI IACF [KR]) 5 April 2012 (2012-04-05) * claims 1,2 * | 8,9 | |
| Y | US 12 059 649 B2 (CARBON CLEAN SOLUTIONS LTD [GB]) 13 August 2024 (2024-08-13) * claim 1 * * column 12, lines 53-56 * * column 13, lines 8-9 * | 8,9 | |
| A | US 2022/233997 A1 (NAH IN WOOK [KR] ET AL) 28 July 2022 (2022-07-28) * claim 1 * | 1-15 | TECHNICAL FIELDS SEARCHED (IPC) |
| A | EP 2 963 107 B1 (RICERCA SUL SIST ENERGETICO - RSE S P A [IT]) 15 November 2017 (2017-11-15) * claims 1,10,11 * | 1-15 | B01D |
| A | US 2015/098889 A1 (JUNG TAESUNG [KR] ET AL) 9 April 2015 (2015-04-09) * claims 1,3,6 * | 8,9 | |

The present search report has been drawn up for all claims

1

| Place of search | Date of completion of the search | Examiner |
|---|---|---|
| Munich | 10 March 2025 | Harf, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 6465

This annex lists the patent family members relating to the patent documents cited in the above-mentioned European search report. The members are as contained in the European Patent Office EDP file on
The European Patent Office is in no way liable for these particulars which are merely given for the purpose of information.

10-03-2025

| Patent document cited in search report | Publication date | Patent family member(s) | Publication date |
|---|---|---|---|
| US 9802150 B2 | 31-10-2017 | KR 20140087788 A | 09-07-2014 |
| | | US 2015336045 A1 | 26-11-2015 |
| | | WO 2014104790 A1 | 03-07-2014 |
| WO 2014104789 A1 | 03-07-2014 | KR 101398620 B1 | 23-05-2014 |
| | | WO 2014104789 A1 | 03-07-2014 |
| KR 20120032310 A | 05-04-2012 | NONE | |
| US 12059649 B2 | 13-08-2024 | AU 2019295364 A1 | 17-12-2020 |
| | | CA 3098143 A1 | 02-01-2020 |
| | | CN 112351831 A | 09-02-2021 |
| | | EP 3813985 A1 | 05-05-2021 |
| | | JP 7510884 B2 | 04-07-2024 |
| | | JP 2021529084 A | 28-10-2021 |
| | | US 2021308619 A1 | 07-10-2021 |
| | | WO 2020002892 A1 | 02-01-2020 |
| US 2022233997 A1 | 28-07-2022 | EP 4035760 A1 | 03-08-2022 |
| | | KR 20220108582 A | 03-08-2022 |
| | | US 2022233997 A1 | 28-07-2022 |
| EP 2963107 B1 | 15-11-2017 | DK 2963107 T3 | 19-02-2018 |
| | | EP 2963107 A1 | 06-01-2016 |
| | | ES 2658978 T3 | 13-03-2018 |
| | | HR P20180191 T1 | 06-04-2018 |
| | | SI 2963107 T1 | 30-04-2018 |
| US 2015098889 A1 | 09-04-2015 | KR 20150041257 A | 16-04-2015 |
| | | US 2015098889 A1 | 09-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20160250591 A1
- EP 4035760 A1
- US 8119091 B2
- WO 2004089512 A1
- US 7157554 B2


### Non-patent literature cited in the description


- **HELDEBRANT, D.J. et al.** Water-Lean Solvents for Post-Combustion CO2 Capture: Fundamentals, Uncertainties, Opportunities, and Outlook.. *Chem Rev.*, 26 July 2017, vol. 117 (14), 9594-9624